# EUROPÄISCHE PATENTSCHRIFT

(11) **EP 4 335 008 B1**
(45) Veröffentlichungstag und Bekanntmachung des Hinweises auf die Patenterteilung: **14.08.2024**
(21) Anmeldenummer: 22740774.9
(22) Anmeldetag: 23.06.2022
(51) Int. Cl.: H02G 3/06, H02G 15/068, F16F 1/04

(54) **KONTAKTELEMENT UND KABELVERSCHRAUBUNG**
CONTACT ELEMENT AND CABLE GLAND
ÉLÉMENT DE CONTACT ET PRESSE-ÉTOUPE

(30) Priorität: 23.06.2021 DE 102021116200
(43) Veröffentlichungstag der Anmeldung: 13.03.2024
(73) Patentinhaber: Pflitsch GmbH & Co. KG., 42499 Hückeswagen (DE)
(72) Erfinder: LECHNER, Martin, 51789 Lindlar (DE); VON OTTE, Robert, 58579 Schalksmühle (DE)
(74) Vertreter: Geskes, Christoph
(86) Internationale Anmeldenummer: PCT/EP2022/067221
(87) Internationale Veröffentlichungsnummer: WO 2022/268977

(56) Entgegenhaltungen:
- CN-U- 204 651 864
- CN-U- 204 651 870
- CN-U- 204 858 500
- DE-A1- 102008 018 205
- US-A1- 2011 062 640
- US-A1- 2016 204 557
- US-A1- 2017 056 956

## Beschreibung

Die Erfindung betrifft eine Kabelverschraubung mit mindestens einem Kontaktelement.

Kontaktelemente zur Sicherung einer elektromagnetischen Verträglichkeit (EMV) sind aus dem Stand der Technik allgemein bekannt. So offenbart DE 10 2008 018 205 B4 eine Vorrichtung zur elektromagnetisch verträglichen Anordnung eines Kabels mit einem Kontaktierungsmittel aus einem gewendelten Federelement, wobei Windungen des Federelementes einen im Wesentlichen geraden Halteabschnitt aufweisen, der in Montagesolllage parallel zum Mantel der Durchführöffnung ausgerichtet ist, und wobei sich das Federelement an einem Mantel oder einer Schirmung eines Kabels abstützt.

US 2017/056956 A1 offenbart ein Kontaktelement mit einer schräggestellten Feder.

US 2011 /062640 A1 offenbart eine schräggestellte Feder als Kontaktelement von Subminiatur-Bauteilen. CN 204 651 864 U offenbart eine Kabelverschraubung mit einer Kontaktfeder. CN 204 651 870 U offenbart eine Kabelverschraubung mit einer Kontaktfeder. CN 204 858 500 U offenbart eine Kabelverschraubung mit einer Kontaktfeder. US 2016/204557 A1 offenbart eine Verbindungsvorrichtung für Hochfrequenz-Signale.

Die aus dem Stand der Technik bekannten Kontaktelemente für Kabelverschraubungen haben den Nachteil, dass sie auf genau einen Durchmesser oder einen sehr beschränkten Durchmesserbereich eines Langformteils ausgelegt sind. Für unterschiedliche Langformteildurchmesser werden somit verschiedene Kontaktelemente mit unterschiedlichen Innendurchmessern verwendet. Folglich muss für unterschiedliche Langformteildurchmesser eine Vielzahl von Kabelverschraubungen vorgehalten werden, was aufwendig und kostenintensiv ist. Weiterhin müssen die aus dem Stand der Technik bekannten Kontaktelemente an die jeweilige geforderte elektromagnetische Verträglichkeit (EMV) angepasst werden. Das Kontaktelement muss derart ausgelegt sein, dass dieses in einen Schirm induzierten Strömen oder Fehlerströmen unbeschadet stand hält.

Es ist Aufgabe der vorliegenden Erfindung, die aus dem Stand der Technik bekannten Kabelverschraubungen mit Kontaktelementen zu verbessern. Insbesondere ist Aufgabe der Erfindung, die Einsetzbarkeit und/oder Austauschbarkeit des Kontaktelementes zu verbessern. Insbesondere ist es Aufgabe, eine Kabelverschraubung zur Verfügung zu stellen, die eine Vielzahl unterschiedlicher Langformteile mit unterschiedlichen Durchmessern aufzunehmen und zu kontaktieren vermag. Insbesondere ist Aufgabe der Erfindung, eine Kabelverschraubung mit einem Kontaktelement zur Verfügung zu stellen, das kleine Durchmesser von Langformteilen sicher kontaktieren kann und gleichzeitig leicht zu montieren ist. Insbesondere ist Aufgabe der Erfindung, eine Kabelverschraubung mit einem Kontaktelement zur Verfügung zu stellen, das in ein einfach zu fertigendes Bauteil einsetzbar ist.

Die Aufgabe wird erfindungsgemäß gelöst mittels einer Kabelverschraubung mit mindestens einem Kontaktelement zur Kontaktierung zumindest mit einem Langformteil, bevorzugt eines Kabels, wobei das Kontaktelement (im unmontierten Zustand) zumindest mehrere erste Windungen und mehrere gegenüber der ersten Windungen geometrisch unterschiedliche zweite Windungen und eine Durchtrittsöffnung zur Durchführung eines Langformteils umfasst, wobei ein erster Durchmesser d1 der Durchtrittsöffnung durch die ersten Windungen und ein zweiter Durchmesser d2 der Durchtrittsöffnung durch die zweiten Windungen definiert ist und wobei der erste Durchmesser d1 und der zweite Durchmesser d2 unterschiedlich sind.

Es wird eine Kabelverschraubung mit mindestens einem Kontaktelement zur Kontaktierung, bevorzugt zur Abschirmung oder Dämpfung von elektromagnetischen Störeinflüssen und/oder zur Sicherstellung einer elektromagnetischen Verträglichkeit, beispielsweise nach IEC 62153-4-10:2015+AMD1:2020 CSV, zumindest mit einem Langformteil, insbesondere ein Kabel, im unmontierten Zustand vorgeschlagen. Das Kontaktelement umfasst mehrere erste Windungen und mehrere gegenüber der ersten Windungen geometrisch unterschiedliche zweite Windungen und eine Durchtrittsöffnung zur Durchführung eines Langformteils. Ein erster Durchmesser d1 der Durchtrittsöffnung ist durch die ersten Windungen und ein zweiter Durchmesser d2 der Durchtrittsöffnung durch die zweiten Windungen definiert, wobei der erste Durchmesser d1 und der zweite Durchmesser d2 unterschiedlich sind.

Im Sinne der Erfindung ist unter "geometrisch unterschiedlich" zu verstehen, dass die Formgebung der ersten und der zweiten Windungen, insbesondere in einer Ansicht jeweils auf die ersten und der zweiten Windungen in Umfangsrichtung des Kontaktelementes, nicht kongruent sind. Insbesondere sind die Projektionen der ersten und zweiten Windungen jeweils auf eine Ebene, auf die ein Radius auf die Hauptachse des Kontaktelementes angeordnet ist und die die jeweilige Windung zumindest schneidet, bevorzugt einen Halteabschnitt der Windung zumindest schneidet, nicht deckungsgleich.

Erfindungsgemäß ist vorgesehen, dass ein erster Durchmesser d1 der Durchtrittsöffnung durch die ersten Windungen und ein zweiter Durchmesser d2 der Durchtrittsöffnung durch die zweiten Windungen definiert ist.

Erfindungsgemäß ist vorgesehen, dass der erste Durchmesser d1 und der zweite Durchmesser d2 unterschiedlich sind.

Vorteil der unterschiedlich ausgestalten Windungen, die zumindest zwei unterschiedliche Durchmesser der Durchtrittsöffnungen definieren, ist einerseits, dass nur ein Kontaktelement für Langformteile mit unterschiedlichen Durchmessern vorgehalten werden muss, und andererseits, dass sich bei größeren Langformteildurchmessern, bei denen größere Stromableitungen erwartet werden, oder eben bei mehreren Langformteilen eine größere Anzahl von kontaktierenden Windungen an das Langformteil anlegen kann. Eine Vielzahl von gleichen Windungen, die nur einen Durchmesser für eine Durchtrittsöffnung definieren, würde nicht ermöglichen, Langformteile mit unterschiedlichen Langformteildurchmessern sicher zu kontaktieren. Weiterhin vorteilhaft wird auch bei kleinen Durchmessern, bei denen insbesondere wenige erste Windungen den Durchmesser der Durchtrittsöffnung definieren, durch die zweiten Windungen ausreichend Federdrahtlänge und somit ein größerer flexibler Bereich zur Verfügung gestellt als bei aus dem Stand der Technik bekannten Lösungen. Hierdurch wird die Federsteifigkeit verringert, wodurch für kleine Durchmesser, beispielsweise von etwa 2 mm bis etwa 6 mm, erst eine vernünftige Montage eines Langformteils in das Kontaktelement ermöglicht wird. Vorteilhaft wird mit dem vorgeschlagenen Kontaktelement auch erreicht, dass weniger Teile vorgehalten werden müssen, um insbesondere unterschiedliche Langformteile zu montieren. Bei dem vorgeschlagenen Kontaktelement definieren nur einzelne Windungen einen kleinen Durchmesser für Langformteile mit geringem Langformteildurchmesser, wobei gleichzeitig insgesamt ausreichend Windungen vorhanden sind, um auch Ströme von Langformteilen größeren Langformteildurchmessers abzuleiten, da dann auch die weiteren Windungen in Kontakt mit dem Langformteil kommen.

Ein weiterer Vorteil der Erfindung ist, dass nur einige Windungen, vorzugsweise nur die ersten Windungen, einen kleineren Durchmesser als die zweiten Windungen formen. Für kleine Langformteildurchmesser, beispielsweise etwa 2 mm bis etwa 6 mm, ist es notwendig, weniger Windungen vorzusehen, da eine Summe der Einzel-Drahtdurchmesser der Windungen einen Umfang der Durchgangsöffnung definieren. Die Federsteifigkeit ist bei einer geringen Anzahl von Windungen allerdings wesentlich höher, so dass bei einer bestimmten Reduktion die Feder zu steif zum Einbau beziehungsweise zum Einsetzen in ein Bauteil wird. Um die Federsteifigkeit zu reduzieren sind insbesondere zweite Windungen vorgesehen, die nicht bis zum Durchmesser reichen, der durch die ersten Windungen definiert wird. Damit wird vorteilhaft die Federlänge erhöht und somit die Federsteifigkeit verringert. Hierdurch wird die Einsetzbarkeit und die Variabilität für unterschiedliche Durchmesser der Langformteile ermöglicht.

Das Kontaktelement umfasst bevorzugt einen Draht, der die Windungen formt. Der Draht weist einen Drahtdurchmesser auf. Im Sinne der Erfindung ist unter dem Drahtdurchmesser ein Durchmesser des Drahtes quer zur Längserstreckung des Drahtes, der die einzelnen Windungen formt, zu verstehen. In einer Ausgestaltung ist der Draht metallisch, elektrisch leitend und bevorzugt federelastisch.

Das Kontaktelement weist eine Durchtrittsöffnung auf. Wird mindestens ein Langformteil in das vorgeschlagene Kontaktelement eingebracht, insbesondere durch die Durchtrittsöffnung geführt, wird dieses je nach Durchmesser des Langformteils oder dem Durchmesser, der von einer Vielzahl von Langformteilen gebildet wird, vorteilhaft von den ersten Windungen und/oder zweiten Windungen kontaktiert. Insbesondere wenn das Langformteil in einem Kontaktbereich einen freiliegenden elektromagnetischen Schirm aufweist, kann ein elektrischer Strom vom Schirm in das Kontaktelement oder anders herum fließen, ein Spannungsausgleich stattfinden und insbesondere das Langformteil geerdet werden. Durch die sichere elektrische Verbindung von Langformteil und Bauteil, die durch das Kontaktelement ermöglicht ist, wird eine elektromagnetische Verträglichkeit sicher gestellt.

Die mehreren ersten Windungen definieren den ersten Durchmesser d1 der Durchtrittsöffnung im unmontierten Zustand. Die mehreren zweiten Windungen definieren den zweiten Durchmesser d2 der Durchtrittsöffnung im unmontierten Zustand. Der erste Durchmesser d1 unterscheidet sich vom zweiten Durchmesser d2 im unmontierten Zustand. Bevorzugt ist der zweite Durchmesser d2 größer als der erste Durchmesser d1 im unmontierten Zustand. In einer Ausgestaltung können weitere Windungen vorgesehen sein, beispielsweise dritte Windungen und/oder vierte Windungen. Bevorzugt unterscheiden sich die weiteren Windungen von den ersten Windungen und den zweiten Windungen im unmontierten Zustand. Weiter bevorzugt definieren die weiteren Windungen weitere Durchmesser der Durchtrittsöffnung insbesondere im unmontierten Zustand.

In einer bevorzugten Ausgestaltung ist vorgesehen, dass das Kontaktelement ringförmig ausgebildet ist. Bevorzugt ist die ringförmig ausgebildete Feder in sich geschlossen, weiter bevorzugt durch Verbinden beziehungsweise Fügen der Enden zu einem Ring geformt. Weiter bevorzugt umfasst das Kontaktelement eine gewendelte, ringförmig geschlossene Feder, bevorzugt aus einem drahtförmigen, elektrisch leitfähigen Material. Weiterhin ist eine Einhüllende der Drahtfeder im Wesentlichen wie ein Torus ausgebildet.

Die Windungen im Sinne der vorliegenden Anmeldung sind durch eine Anfangsstelle und eine Endstelle, die in einer Ebene liegen, deren Normale eine Hauptachse durch die Durchgangsöffnung des Kontaktelementes ist, definiert. In einer Ausgestaltung weisen Anfangsstelle und Endstelle den gleichen Abstand zur Hauptachse des Kontaktelementes auf. Alternativ können Anfangsstelle und Endstelle einen unterschiedlichen Abstand zur Hauptachse des Kontaktelementes aufweisen. Die Windung erstreckt sich gewunden zwischen Anfangsstelle und Endstelle. Bevorzugt ist die Anfangsstelle und/oder die Endstelle in einem Übergang von einem Halteabschnitt einer Windung zu einem Stützabschnitt oder Erstreckungsabschnitt der nächsten Windung angeordnet. Im Sinne der vorliegenden Erfindung gelten Halteabschnitt, Erstreckungsabschnitt und/oder Stützabschnitt als nicht durch die Anfangsstelle und/oder Endstelle unterteilt. Schneidet man beispielsweise das Kontaktelement in der Ebene der Anfangsstelle und der Endstelle an einem Übergang zwischen Halteabschnitt und Stützabschnitt und/oder Erstreckungsabschnitt einen Umfang des Kontaktelementes entlang auf, zerfällt dieses in die einzelnen zumindest ersten und zweiten Windungen.

Aneinander angrenzende Abschnitte der einzelnen ersten und/oder zweiten Windungen, insbesondere Halteabschnitt, zumindest ein Stützabschnitt und gegebenenfalls zumindest ein Erstreckungsabschnitt, sind bevorzugt durch einen Knick oder eine Biegestelle voneinander unterscheidbar. Beispielsweise grenzt ein Halteabschnitt an einen weiteren Abschnitt, bevorzugt ein Stützabschnitt und/oder ein Erstreckungsabschnitt, und ist mit diesem über eine Biegestelle verbunden. Auch Stützabschnitt und Erstreckungsabschnitt können über eine Biegestelle miteinander verbunden sein.

Bevorzugt umfasst eine erste und/oder eine zweite Windung zumindest einen Halteabschnitt und einen Stützabschnitt, die bevorzugt mittelbar oder unmittelbar miteinander verbunden sind, und weiter bevorzugt durch einen Erstreckungsabschnitt miteinander, und damit mittelbar miteinander, verbunden sind. In einer Ausgestaltung grenzt an beiden Enden des Stützabschnitts ein erster und ein zweiter Erstreckungsabschnitt an und ist bevorzugt mittelbar oder unmittelbar mit diesem verbunden. In einer Ausgestaltung ist vorgesehen, dass zwischen dem Halteabschnitt und dem zumindest einen Erstreckungsabschnitt und/oder zwischen dem zumindest einem Stützabschnitt und dem zumindest einen Erstreckungsabschnitt und/oder dem Halteabschnitt und dem Stützabschnitt ein Radialabschnitt ausgebildet ist. In diesem Fall sind der mindestens eine Halteabschnitt, der Erstreckungsabschnitt und/oder der Stützabschnitt mittelbar miteinander verbunden. Bevorzugt ist der Radialabschnitt in Windungsrichtung möglichst kurz ausgebildet. Weiter bevorzugt stellt der Radialabschnitt den technisch notwendigen Biegeradius der Biegestelle dar, der zwischen den einzelnen Abschnitten zwangsläufig vorliegt. In einer Ausgestaltung ist vorgesehen, dass der Radialabschnitt länger als technisch notwendig ist. Bevorzugt umfasst der Radialabschnitt einen Radius, der so klein wie technisch notwendig ist. Alternativ umfasst der Radialabschnitt einen Radius, der größer als technisch notwendig ist. Bevorzugt sind der zumindest eine Halteabschnitt, der zumindest eine Erstreckungsabschnitt und/oder der zumindest eine Stützabschnitt jeweils mittelbar miteinander durch Radialabschnitte verbunden.

In einer Ausgestaltung ist vorgesehen, dass die Grundform der ersten und/oder der zweiten Windung, in einer Ansicht auf die erste beziehungsweise zweite Windung in Umfangsrichtung des Kontaktelementes, ausgewählt ist aus einer Gruppe umfassend in etwa rund, ellipsoid, dreieckig, viereckig, fünfeckig oder mehreckig, quadratisch, rechteckig, trapezförmig, polygonal, halbkreisförmig und/oder hausförmig. Bevorzugt weist die erste und/oder zweite Windung eine Grundform auf, die aus mehreren Formen oder Teilen mehrerer Formen zusammengesetzt ist, wie beispielsweise aus Teilen ein Dreieck und ein Rechteck, beispielsweise eine Hausform, oder beispielsweise eine Rundung oder ein Teilkreis und ein Teil eines Rechtecks oder beispielsweise eine Rundung und ein Teil eines Dreiecks. In einer Ausgestaltung ist die erste Windung und/oder die zweite Windung nicht kreisförmig und/oder nicht oval ausgestaltet.

Beispielhafte Aufzählungen sind im Sinne der Erfindung als nicht abschließend anzusehen, sondern können im Rahmen des allgemeinen Fachwissens ergänzt werden.

In einer Ausgestaltung ist vorgesehen, dass die ersten und die zweiten Windungen gleiche, bevorzugt ähnliche, oder unterschiedliche, bevorzugt unähnliche, Grundformen aufweisen, in einer Ansicht auf die erste beziehungsweise zweite Windung in Umfangsrichtung des Kontaktelementes.

In einer Ausgestaltung ist vorgesehen, dass die erste und/oder die zweite Windung zumindest einen Halteabschnitt umfassen. Insbesondere ist vorgesehen, dass die ersten und/oder die zweiten Windungen mindestens einen Halteabschnitt zur Kontaktierung an einem Bauteil umfassen. Bevorzugt ist mittels des Halteabschnitts eine Innenwandung eines Bauteils kontaktierbar, das bevorzugt Teil einer Kabelverschraubung ist, und weiter bevorzugt als ein Nippel oder Doppelnippel ausgebildet ist.

In einer Ausgestaltung ist der Halteabschnitt oder eine Projektion des Halteabschnittes in einer Ebene, auf der die Hauptachse angeordnet ist, in einem Winkel oder parallel zur Hauptachse angeordnet. In einer Ausgestaltung ist vorgesehen, dass der mindestens eine Halteabschnitt geradlinig ausgebildet ist, und weiter bevorzugt zu einer mittig durch die Durchgangsöffnung gehenden Hauptachse des Kontaktelementes einen Winkel in einem Bereich von etwa -50° bis etwa +50°, bevorzugt etwa - 45° bis etwa +45°, weiter bevorzugt etwa -30° bis etwa +30°, aufweist. Insbesondere kann um das Kontaktelement eine Einhüllende gelegt werden. Die Einhüllende ist eine gedachte Fläche, die jede Windung, bevorzugt jeden Abschnitt jeder Windung des Kontaktelementes, bevorzugt außenseitig, berührt. Die Einhüllende bildet im Bereich der Halteabschnitte eine Mantelfläche aus. Bevorzugt ist die Mantelfläche der Einhüllenden des Kontaktelementes im Wesentlichen konisch (bei einer winkeligen Anordnung des Halteabschnitts wie vorstehend beschrieben) oder zylindrisch (bei einer parallelen Anordnung des Halteabschnitts wie vorstehend beschrieben) geformt. Die sich aus der Mantelfläche ableitende konische Formgebung des Kontaktelementes hat den Vorteil, dass das Kontaktelement sich leicht in ein insbesondere innen zylindrisch ausgestaltetes Bauteil einbringen lässt. Insbesondere kann sich der derart angewinkelte Halteabschnitt an die Innenwandung des Bauteils anlegen, wobei sich die Windungen in einer Aufsicht auf das Kontaktelement in Richtung der Hauptachse winkelig zum Radius auf die Hauptachse ausrichten.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 %, vorgesehen. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar. Der Begriff "im Wesentlichen" gibt im Rahmen der Erfindung einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

In einer Ausführungsform ist vorgesehen, dass nur die ersten Windungen oder nur die zweiten Windungen einen Halteabschnitt aufweisen, der mit einem Bauteil kontaktierbar ist. In einer Ausgestaltung wird die Mantelfläche der Einhüllenden des Kontaktelementes im Wesentlichen nur durch die ersten Windungen oder nur durch die zweiten Windungen geformt. In einer weiteren Ausgestaltung ist vorgesehen, dass der Halteabschnitt der ersten Windungen und der Halteabschnitt der zweiten Windungen die Mantelfläche der Einhüllenden des Kontaktelementes formt. Insbesondere ist die Mantelfläche der Einhüllenden des Kontaktelementes zylindrisch oder konusförmig ausgestaltet. In einer weiteren Ausgestaltung ist vorgesehen, dass ein Halteabschnitt der ersten oder zweiten Windungen radial zur Hauptachse weiter außen angeordnet ist, als ein Halteabschnitt der jeweils anderen Windungen.

In einer Ausgestaltung ist vorgesehen, dass insbesondere die zweiten Windungen doppelt gewunden sind. Die doppelt gewundenen zweiten Windungen zeichnen sich bevorzugt dadurch aus, dass diese einen Halteabschnitt aufweisen, der zwischen zwei Teilwindungen angeordnet ist. Der Erstreckungsabschnitt der zweiten Windungen ist bevorzugt näher an der Hauptachse angeordnet als der Erstreckungsabschnitt der ersten Windungen. Der Erstreckungsabschnitt ist bevorzugt in zwei Teile aufgeteilt. Durch diese Ausgestaltung wird vorteilhaft ermöglicht, dass ein Abschnitt der Innenwandung eines Bauteils, in den das Kontaktelement montierbar ist, zwischen den Erstreckungsabschnittteilen eingerastet werden kann. Das Bauteil kann beispielsweise derart gefertigt sein, dass eine Bohrung einen ersten und einen zweiten Abschnitt mit einem Durchmesser aufweist, der für die Anlage der Erstreckungsabschnitte der ersten Windungen geeignet ist, wobei zwischen dem ersten und dem zweiten Abschnitt ein dritter Abschnitt mit einem geringeren Innendurchmesser als der erste und der zweite Abschnitt angeordnet ist, der für die Anlage des Erstreckungsabschnittes ausgelegt ist.

In einer weiteren Ausgestaltung ist vorgesehen, dass die ersten und die zweiten Windungen einen Stützabschnitt insbesondere zur Anlage an mindestens ein Langformteil aufweisen. Der Stützabschnitt kann im Wesentlichen gerade oder abgerundet ausgestaltet sein. Insbesondere definiert der Stützabschnitt der ersten Windungen den ersten Durchmesser d1 der Durchtrittsöffnung. Insbesondere definiert der Stützabschnitt der zweiten Windungen den zweiten Durchmesser d2 der Durchtrittsöffnung.

In einer weiteren Ausgestaltung ist vorgesehen, dass die ersten und/oder die zweiten Windungen mindestens einen Erstreckungsabschnitt umfassen, der insbesondere an den Halteabschnitt anschließt. Bevorzugt ist der Erstreckungsabschnitt zwischen dem Halteabschnitt und dem Stützabschnitt angeordnet. In einer Ausgestaltung ist vorgesehen, dass eine Windung einen ersten und einen zweiten Erstreckungsabschnitt aufweist, die beidseitig des Stützabschnittes angeordnet sind. In einer Ausgestaltung ist der erste Erstreckungsabschnitt im Wesentlichen gleich lang, kürzer oder länger als der zweite Erstreckungsabschnitt.

Bevorzugt grenzen sich Halteabschnitt, Stützabschnitt und gegebenenfalls Erstreckungsabschnitt voneinander durch eine unterschiedliche Formgebung ab. So ist beispielsweise der Halteabschnitt als gerader Abschnitt der Windung ausgeformt, der bevorzugt radial außen des Kontaktelementes angeordnet ist. Weiterhin bevorzugt ist der Stützabschnitt als ein Kreisabschnitt, Ovalabschnitt oder winklig geformter Abschnitt mit zwei Schenkeln ausgestaltet. Der Stützabschnitt ist in einer Ausgestaltung in sich gewunden und umfasst beispielsweise zwei dreieckige, rechteckige oder gerundete Windungsabschnitte. Bevorzugt ist vorgesehen, dass der Erstreckungsabschnitt rechtwinklig zur Hauptachse verläuft.

In einer Ausgestaltung des Kontaktelementes, in der der Halteabschnitt im Wesentlichen parallel zur Hauptachse angeordnet ist, projizieren in einer Aufsicht auf das Kontaktelement in Richtung der Hauptachse die einzelnen ersten und/oder zweiten Windungen bevorzugt jeweils zwei Schenkel auf eine Ansichtsebene. Dies ist insbesondere bei einer zylindrischen Formgebung des Kontaktelementes der Fall. Die Ansichtsebene ist eine Ebene, deren Normale die Hauptachse des Kontaktelementes ist. Bevorzugt sind die beiden auf die Ansichtsebene projizierten Schenkel bevorzugt des Stützabschnittes, weiter bevorzugt zumindest des Stützabschnittes und des Erstreckungsabschnittes, an einer Scheitelstelle miteinander verbunden. Die Winkelhalbierende der beiden Schenkel ist im Folgenden die Ausrichtung der ersten und/oder zweiten Windungen. Fällt die Ausrichtung der ersten und/oder zweiten Windungen mit dem Radius des Kontaktelementes auf die Hauptachse zusammen oder ist um etwa ± 5° vom Radius auf die Hauptachse abgewinkelt, sind die ersten und/oder zweiten Windungen im Sinne der vorliegenden Anmeldung im Wesentlichen radial ausgerichtet. In dieser Ausgestaltung weisen in einem unmontierten Zustand des Kontaktelementes die ersten und/oder die zweiten Windungen eine im Wesentlichen radiale Ausrichtung auf. Weicht die Winkelhalbierende respektive die Ausrichtung der ersten und/oder zweiten Windungen von dem Radius des Kontaktelementes auf die Hauptachse um mehr als etwa ±5°, bevorzugt um etwa ±6° bis etwa ±80° ab, weist die erste und/oder zweite Windung eine vom Radius auf die Hauptachse abweichende Ausrichtung auf.

In einer weiteren, ebenfalls bevorzugten Ausgestaltung ist vorgesehen, dass die ersten und/oder zweiten Windungen in einem unmontierten Zustand eine Ausrichtung aufweisen, die etwa ±6° bis etwa ±30°, bevorzugt etwa ±6° bis etwa ±15°, weiter bevorzugt etwa ±6° bis ±10°, vom Radius auf die Hauptachse abweichen. Bevorzugt sind nur die ersten oder nur die zweiten Windungen vom Radius auf die Hauptachse abgewinkelt ausgestaltet. Weiter bevorzugt weichen alle ersten und/oder alle zweiten Windungen etwa um den gleichen Winkel, bevorzugt in die gleiche Richtung, gegen den Uhrzeigersinn oder mit dem Uhrzeigersinn, zum Radius auf die Hauptachse ab. Weiter bevorzugt weichen die ersten Windungen und die zweiten Windungen in einem unterschiedlichen Winkel vom Radius auf die Hauptachse ab. In einer weiteren Ausgestaltung sind die ersten Windungen oder die zweiten Windungen radial ausgerichtet, während die jeweils anderen Windungen eine vom Radius auf die Hauptachse abweichende Ausrichtung aufweisen.

In einer Ausgestaltung ist vorgesehen, dass die ersten und/oder zweiten Windungen in einem in ein Bauteil, insbesondere mit zylindrischer Innenwandung, montierten Zustand ohne durchgeführtes Langformteil eine radiale Ausrichtung aufweisen. In einer weiteren Ausgestaltung ist vorgesehen, dass die ersten und/oder zweiten Windungen in einem in ein Bauteil, insbesondere mit zylindrischer Innenwandung, montierten Zustand ohne durchgeführtes Langformteil in einem Winkel zum Radius auf die Hauptachse ausgerichtet sind.

In einer Ausgestaltung ist vorgesehen, dass die Ausrichtung der ersten und/oder zweiten Windungen in einem montierten Zustand ohne mindestens ein durch die Durchgangsöffnung des Kontaktelementes durchgeführtes Langformteil etwa ±6° bis etwa ±50°, bevorzugt etwa ±6° bis etwa ±30°, weiter bevorzugt etwa ±8° bis ±25°, zum Radius auf die Hauptachse abweichen. In einer Ausgestaltung ist vorgesehen, dass die Ausrichtung der ersten und/oder zweiten Windungen in einem montierten Zustand mit durchgeführtem Langformteil etwa ±10° bis etwa ±80°, bevorzugt etwa ±10° bis etwa ±75°, weiter bevorzugt etwa ±20° bis ±70°, zum Radius auf die Hauptachse abweichen. Durch die Durchführung des Langformteils bei in einem Bauteil mit zylindrischer Innenwandung montiertem Kontaktelement vergrößert sich bevorzugt die Abwinklung der mindestens ersten und/oder zweiten Windungen, bevorzugt aller Windungen, im Vergleich zum montierten Zustand in einem solchen Bauteil ohne durchgeführtes Langformteil.

In einer Ausgestaltung ist vorgesehen, dass die ersten und/oder zweiten Windungen in einem in ein Bauteil, insbesondere mit zylindrischer Innenwandung, montierten Zustand mit mindestens einem Langformteil, das durch das Bauteil und durch das Kontaktelement geführt ist, winklig zum Radius auf die Hauptachse ausgerichtet sind.

In einer Ausgestaltung ist vorgesehen, dass erste und zweite Windungen in Umfangsrichtung des Kontaktelementes abwechselnd angeordnet sind. In einer weiteren Ausgestaltung ist vorgesehen, dass zwischen zwei ersten Windungen ein oder mehrere zweite Windungen angeordnet sind. Beispielsweise können zwischen zwei ersten Windungen zwei oder drei zweite Windungen angeordnet sein. In einer weiteren Ausgestaltung ist vorgesehen, dass die ersten und die zweiten Windungen einzeln oder in Gruppen abwechselnd angeordnet sind. Beispielsweise kann eine Gruppe von zwei ersten Windungen mit einer Gruppe von zwei zweiten Windungen alternieren.

In einer Ausgestaltung ist vorgesehen, dass eine Vielzahl von Ausgestaltungen von zweiten Windungen vorgesehen ist, die bevorzugt den zweiten Durchmesser d2 definieren. Insbesondere unterscheiden sich die Ausgestaltungen zweiter Windungen geometrisch voneinander. Bevorzugt sind jeweils eine zweite Windungen der unterschiedlichen Ausgestaltung jeweils zwischen ersten Windungen angeordnet. Beispielsweise sind genau eine erste Ausgestaltung der zweiten Windungen und genau eine zweite Ausgestaltung der zweiten Windungen und gegebenenfalls genau eine dritte Ausgestaltung der zweiten Windungen jeweils zwischen ersten Windungen angeordnet.

In einer Ausgestaltung ist beispielsweise vorgesehen, dass die ersten Windungen ausgebildet sind mit mindestens einem Erstreckungsabschnitt und den ersten Durchmesser d1 der Durchgangöffnung definieren und die zweiten Windungen im Wesentlichen dreieckig, in einer Ansicht auf die zweite Windung in Umfangsrichtung des Kontaktelementes, ausgebildet sind und den zweiten Durchmesser d2 der Durchgangsöffnung definieren, wobei der erste Durchmesser d1 kleiner ist als der zweite Durchmesser d2. Beispielsweise sind die ersten Windungen dabei hausförmig beziehungsweise fünfeckig ausgebildet. Bevorzugt umfassen die ersten Windungen zwei Erstreckungsabschnitte. Weiter bevorzugt sind die Erstreckungsabschnitte der ersten Windungen etwa gleich lang ausgebildet. Weiter bevorzugt wechseln sich erste Windungen und zweite Windungen in Umfangsrichtung ab. In einer Ausgestaltung ist vorgesehen, dass die ersten Windungen und zweiten Windungen im Wesentlichen dreieckig, in einer Ansicht auf die Windungen ausgebildet sind, und die ersten Windungen gegenüber den zweiten Windungen jeweils zusätzlich zwischen dem Stützabschnitt und dem Halteabschnitt einen Erstreckungsabschnitt aufweisen.

In einer Ausgestaltung umfasst das Kontaktelement zumindest ein elektrisch leitendes Material. Bevorzugt umfasst das Kontaktelement zumindest ein Material ausgewählt aus einer Gruppe umfassend Stahl, Federstahl, Kupfer, Gold, Messing und/oder Kohlenstoff und dessen Modifikationen.

Ein beispielhaftes Kontaktelement gemäß der vorliegenden Erfindung im unmontierten Zustand weist eine Vielzahl erster Windungen und eine Vielzahl zweiter Windungen auf, die einander abwechselnd angeordnet sind. Das Kontaktelement ist torusartig, bevorzugt als ringförmig geschlossene und gewendelte Feder ausgestaltet, weiter bevorzugt aus einem drahtförmigen Material. Die ersten Windungen unterscheiden sich in ihrer geometrischen Ausbildung und in ihren Abmessungen von den zweiten Windungen und ragen unterschiedlich weit in Richtung der Hauptachse nach radial innen. Die ersten und zweiten Windungen definieren eine Durchgangsöffnung. Die ersten und zweiten Windungen weisen eine radiale Ausrichtung auf. Die Formgebung des Kontaktelementes ist zylindrisch. Die Durchgangsöffnung umfasst einen ersten Durchmesser d1, der durch die ersten Windungen definiert ist. Weiterhin umfasst die Durchgangsöffnung einen zweiten Durchmesser, der durch die zweiten Windungen definiert ist. Der erste Durchmesser d1 ist beispielsweise kleiner als der zweite Durchmesser d2, oder umgekehrt.

In der weiteren, beispielhaften Ausgestaltung eines erfindungsgemäßen Kontaktelementes weisen die ersten und zweiten Windungen einen Halteabschnitt auf, der mit einer Innenwandung eines Bauteils in Kontakt gebracht werden kann. Der Halteabschnitt ist beispielhaft parallel zu einer Hauptachse des Kontaktelementes ausgerichtet. Das Kontaktelement weist dann im solchermaßen montierten Zustand eine zylindrische Formgebung auf. In einer weiteren beispielhaften Ausgestaltung kann der Halteabschnitt auch in einem Winkel zur Hauptachse angeordnet sein. Das Kontaktelement weist dann im unmontierten Zustand eine konische Formgebung und in einem im Bauteil montierten Zustand eine zylindrische Formgebung auf. Je nach Produktionsprozess kann der Winkel des Halteelementes zur Hauptachse im unmontierten Zustand unterschiedlich ausgestaltet sein. In einer Ausgestaltung ist der Winkel des Halteelementes zur Hauptachse im unmontierten Zustand etwa 0° bis etwa 90°, bevorzugt etwa 1° bis etwa 90°, weiter bevorzugt etwas 20° bis etwa 60°. Ist insbesondere produktionsbedingt ein Winkel des Halteabschnittes zur Hauptachse von etwa 90° ausgestaltet, ist nur ein Durchmesser der Durchgangsöffnung im unmontierten Zustand vorgesehen, der durch den Übergang von Halteabschnitt zu Stützabschnitt oder Erstreckungsabschnitt gebildet ist. Weiterhin umfassen die ersten und zweiten Windungen jeweils einen Stützabschnitt, der mit mindestens einem Langformteil in Kontakt gebracht werden kann. Der Stützabschnitt ist beispielhaft als winklig geformter Abschnitt mit zwei Schenkeln ausgeführt. Die ersten Windungen können zudem einen Erstreckungsabschnitt aufweisen, der zwischen dem Halteabschnitt und dem Stützabschnitt angeordnet ist. Die zweiten Windungen sind derart ausgestaltet, dass der Stützabschnitt unmittelbar an den Halteabschnitt grenzt.

Das Kontaktelement ist bevorzugt in ein Bauteil einer Kabelverschraubung einbaubar, bevorzugt zur Sicherstellung einer elektromagnetischen Verträglichkeit, beispielsweise nach IEC 62153-4-10:2015+AMD1:2020 CSV. Das erfindungsgemäße Kontaktelement kann in ein Bauteil insbesondere mit einer zylindrischen Innenwand montiert werden. Ist ein Außendurchmesser des Kontaktelementes kleiner oder gleich einem Innendurchmesser des Bauteils, ist das Kontaktelement im montierten Zustand im Wesentlichen unverformt. Ist der Außendurchmesser des Kontaktelementes größer als der Innendurchmesser des Bauteils, ist das Kontaktelement im montierten Zustand radial gestaucht. Hierdurch kann eine Verformung der ersten und/oder zweiten Windungen erfolgen. Ist im montierten Zustand ein Langformteil durch das Bauteil mit Kontaktelement hindurchgeführt, dessen Langformteildurchmesser zumindest größer als der erste und/oder zweite Durchmesser des Kontaktelementes ist, kommen die ersten und/oder zweiten Windungen mit dem Langformteil in Kontakt und werden verformt. Es können also zwei Verformungen des Kontaktelementes im montierten Zustand erfolgen.

In einer beispielhaften Ausgestaltung des Kontaktelements kann dieses in ein Bauteil mit einer zylindrischen Innenwandung montiert und ein Langformteil durch die Durchtrittsöffnung geführt werden. Das Langformteil weist beispielhaft einen Langformteildurchmesser auf, der größer ist als der erste Durchmesser d1, aber kleiner ist als der zweite Durchmesser d2. Die ersten Windungen werden durch die Durchführung des Langformteils und durch den Einsatz in das Bauteil verformt und bilden einen ersten montierten Durchmesser d1ₑ, der gleich groß ist wie der Langformteildurchmesser. Die ersten Windungen werden durch die Durchführung des Langformteils in eine Umfangsrichtung des Kontaktelementes vorteilhafterweise so verformt, dass eine Ausrichtung der ersten Windungen einen Winkel zum Radius auf die Hauptachse des Kontaktelementes aufweisen. Beispielsweise sind die ersten Windungen entgegen dem Uhrzeigersinn ausgerichtet. Die ersten Windungen weisen bevorzugt einen größeren Winkel zum Radius auf die Hauptachse des Kontaktelementes auf als vor dem Einbringen des Langformteils. Die zweiten Windungen sind in dieser beispielhaften Ausgestaltung eines montierten Kontaktelementes bevorzugt im Wesentlichen wie im montierten Zustand ohne durchgeführtes Langformteil ausgerichtet, da das Langformteil diese nicht berührt. Bevorzugt sind die ersten Windungen derart ausgestaltet, dass diese sich über die zweiten Windungen hinweg bewegen können, ohne diese zu berühren oder mitzunehmen. Eine radiale Verschiebung der ersten Windungen beziehungsweise eine radiale Ausdehnung des Kontaktelements wird durch das Bauteil, in das das Kontaktelement montiert ist und an dessen Innenwandung sich die Halteabschnitte des Kontaktelements bevorzugt abstützen, im Wesentlichen verhindert. Die ersten und zweiten Windungen sind insbesondere derart ausgelegt, dass diese im Wesentlichen einzeln verformbar sind. In einer weiteren Ausgestaltung ist eine gemeinsame Verformung der ersten und zweiten Windungen möglich. Bevorzugt können sich die ersten und zweiten Windungen übereinander schieben und kollidieren weiter bevorzugt nicht, wenn das Langformteil in die Durchgangsöffnung eingeführt ist. In einer alternativen Ausgestaltung können sich die ersten und zweiten Windungen berühren, wenn die ersten Windungen verformt werden, bevorzugt im Bereich einer Anlage an das mindestens eine Langformteil über deren Stützabschnitte.

In einer weiteren beispielhaften Ausgestaltung des Kontaktelementes weist dieses in einem unmontierten Zustand dreieckig geformte erste Windungen und rechteckig geformte zweite Windungen auf. In dieser Ausgestaltung definieren die ersten Windungen einen ersten Durchmesser d₁ der Durchtrittsöffnung sowie einen ersten Außendurchmesser d_{A1} des Kontaktelements. Weiterhin definieren die zweiten Windungen einen zweiten Durchmesser d₂ der Durchtrittsöffnung sowie einen zweiten Außendurchmesser d_{A2} des Kontaktelements. Die ersten Windungen sind in der beispielhaften Ausgestaltung im Wesentlichen dreieckig ausgestaltet, wobei der Halteabschnitt und der Stützabschnitt in einer Ansicht in Umfangsrichtung ein etwa gleichschenkliges Dreieck formen, was auch stumpfwinklig ausgebildet sein kann. Stützabschnitt, zwei Erstreckungsabschnitte und Halteabschnitt der zweiten Windungen formen in einer Ansicht in Umfangsrichtung ein Rechteck, wobei der Halteabschnitt der zweiten Windungen radial zur Hauptachse weiter außen angeordnet ist als der Halteabschnitt der ersten Windungen.

In einer weiteren beispielhaften Ausgestaltung des Kontaktelementes umfasst dieses dreieckig geformte erste Windungen und zwei unterschiedliche dreieckig geformten zweite Windungen. Genau eine erste Ausgestaltung der zweiten Windungen und genau eine zweite Ausgestaltung der zweiten Windungen sind jeweils zwischen ersten Windungen angeordnet. In Umfangsrichtung sind erste Windungen und jeweils die beiden unterschiedlichen zweiten Windungen nacheinander angeordnet, sodass eine erste Ausführung der zweiten Windungen der ersten Windung folgt und eine zweite Ausführung der zweiten Windungen der ersten Ausführung der zweiten Windung folgt. Die erste Ausführung der zweiten Windungen ragt zur Hauptachse radial weiter nach außen als die ersten Windungen und die zweite Ausführung der zweiten Windungen. Vorteilhaft wird durch diese Ausgestaltung eine Biegeeigenschaft des Kontaktelements vorteilhaft beeinflusst, insbesondere wird dieses dadurch weicher. Der Halteabschnitt der ersten Ausführung der zweiten Windungen ist beispielhaft zur Hauptachse weiter radial außen angeordnet als der Halteabschnitt der zweiten Ausführung der zweiten Windungen.

In einer weiteren beispielhaften Ausgestaltung weist das Kontaktelement erste Windungen und zwei Ausgestaltungen von zweiten Windungen auf. Insbesondere ist genau eine erste Ausgestaltung der zweiten Windungen und genau eine zweite Ausgestaltung der zweiten Windungen jeweils zwischen ersten Windungen angeordnet. Die ersten Windungen weisen einen Halteabschnitt, einen ersten Erstreckungsabschnitt, einen gebogenen Stützabschnitt, dessen Umhüllende nach innen konvex ausgestaltet sein kann, und einen zweiten Erstreckungsabschnitt auf. Die erste Ausgestaltung der zweiten Windungen weist einen Halteabschnitt, einen ersten Erstreckungsabschnitt, einen Stützabschnitt, dessen Umhüllende nach innen konvex ausgestaltet sein kann, und einen zweiten Erstreckungsabschnitt auf. Die zweite Ausgestaltung der zweiten Windungen weist einen Halteabschnitt, einen ersten Erstreckungsabschnitt, einen Stützabschnitt, dessen Umhüllende nach innen konvex ausgestaltet sein kann, und einen zweiten Erstreckungsabschnitt, der etwa gleich lang ist wie der erste Erstreckungabschnitt, auf. Der Halteabschnitt der ersten Windungen ist etwa so lang ausgestaltet, wie der Halteabschnitt der ersten Ausgestaltung der zweiten Windungen. Der erste Erstreckungsabschnitt der ersten Ausführungsform der zweiten Windungen ist etwa so lang wie der zweite Erstreckungsabschnitt der zweiten Ausführungsform der zweiten Windungen. Der zweite Erstreckungsabschnitt der ersten Ausführungsform der zweiten Windungen ist etwa so lang wie der erste Erstreckungsabschnitt der zweiten Ausführungsform der zweiten Windungen. Der erste Erstreckungsabschnitt der ersten Ausführungsform der zweiten Windungen und der zweite Erstreckungsabschnitt der zweiten Ausführungsform der zweiten Windungen sind länger als der zweite Erstreckungsabschnitt der ersten Ausführungsform der zweiten Windungen und der erste Erstreckungsabschnitt der zweiten Ausführungsform der zweiten Windungen. Der Halteabschnitt der ersten Windung grenzt an den zweiten Erstreckungsabschnitt der vorhergehenden zweiten Ausführungsform der zweiten Windungen, der zweite Erstreckungsabschnitt der ersten Windung grenzt an den ersten Halteabschnitt der ersten Ausführungsform der zweiten Windungen, der zweite Erstreckungsabschnitt der ersten Ausführungsform der zweiten Windungen grenzt an den Halteabschnitt der zweiten Ausführungsform der zweiten Windungen und der zweite Erstreckungsabschnitt der zweiten Ausführungsform der zweiten Windungen grenzt an den Halteabschnitt der nachfolgenden ersten Windungen an, und so weiter. Der Stützabschnitt der ersten Windung definiert einen ersten Durchmesser d₁. Die Stützabschnitte der ersten und zweiten Ausgestaltung der zweiten Windungen definieren einen zweiten Durchmesser d₂, der größer ist als d₁. Der Halteabschnitt der zweiten Ausführungsform der zweiten Windungen ist beispielhaft näher an der Hauptachse angeordnet als der Halteabschnitt der ersten Windungen und der Halteabschnitt der ersten Ausführungsform der zweiten Windungen. Der Halteabschnitt der ersten Windungen und der Halteabschnitt der ersten Ausführungsform der zweiten Windungen ist im Wesentlichen gleich weit von der Hauptachse beabstandet. Durch diese beispielhafte Ausgestaltung wird ermöglicht, dass ein Abschnitt einer Innenwandung eines Bauteils, in den das Kontaktelement montierbar ist, zwischen dem Halteabschnitt der ersten Windung und dem Halteabschnitt der ersten Ausführungsform der zweiten Windungen eingerastet werden kann. Das Bauteil kann beispielsweise derart gefertigt sein, dass eine Bohrung einen ersten und einen zweiten Innendurchmesser aufweist, der für die Anlage des Halteabschnitts der ersten Windung und des Halteabschnitts der ersten Ausgestaltung der zweiten Windungen geeignet ist, wobei der erste und der zweite Innendurchmesser bevorzugt gleich groß sind. Vorteilhaft ist zwischen dem ersten und dem zweiten Innendurchmesser ein dritter Innendurchmesser angeordnet, der kleiner ist als der erste und der zweite Innendurchmesser, der für die Anlage des Halteabschnittes der zweiten Ausgestaltung der zweiten Windungen ausgelegt ist. Der Abschnitt der Innenwandung des Bauteils mit dem dritten Innendurchmesser kann somit zwischen den Halteabschnitten der ersten Windungen und den Halteabschnitten der ersten Ausgestaltung der zweiten Windungen eingerastet werden.

In einer weiteren beispielhaften Ausgestaltung des Kontaktelements kann dieses in ein Bauteil mit einer zylindrischen Innenwandung montiert und ein Langformteil durch die Durchtrittsöffnung geführt werden. Das Langformteil weist beispielhaft einen Langformteildurchmesser auf, der größer ist als der erste Durchmesser d1 und größer als der zweite Durchmesser d2, werden die ersten Windungen und die zweiten Windungen im montierten Zustand im Bauteil nach Durchführung des Langformteils verformt beziehungsweise weiter verformt und bilden einen ersten montierten Durchmesser d1ₑ und einen zweiten montierten Durchmesser d2ₑ, die jeweils gleich groß sind wie der Langformteildurchmesser. Die ersten und zweiten Windungen werden durch die Durchführung des Langformteils in eine Umfangsrichtung des Kontaktelementes beispielsweise derart verformt, dass die Ausrichtung der ersten und zweiten Windungen in einem zur ursprünglichen Ausrichtung geänderten Winkel zum Radius auf die Hauptachse stehen und beispielsweise entgegen oder mit dem Uhrzeigersinn ausgerichtet sind.

In einer weiteren beispielhaften Ausgestaltung des Kontaktelementes sind die Ausrichtungen der ersten und zweiten Windungen in einem unmontierten Zustand winklig, beispielsweise in einem Winkel von etwa 25°, zum Radius auf die Hauptachse des Kontaktelements ausgerichtet.

Die ersten und zweiten Windungen können unterschiedlich ausgeführt sein und insbesondere beliebig kombiniert werden. So können die ersten und/oder zweiten Windungen dreieckig, hausförmig, fünfeckig, sechseckig, abgerundet, kreisförmig gewunden oder in sich selbst nochmals gewunden ausgeführt sein. Insbesondere umfassen Windungen, die nochmals in sich gewunden sind, in einer Aufsicht in Umfangsrichtung des Kontaktelementes zumindest einen gewundenen Unterabschnitt. Der gewundene Unterabschnitt ist beispielsweise in einer Aufsicht auf die Windung in Umfangsrichtung des Kontaktelements um 360° geführt. Dabei kann der Unterabschnitt eine gerundete und/oder polygone Formgebung aufweisen. Die ersten und/oder zweiten Windungen können symmetrisch oder asymmetrisch ausgestaltet sein. Beispielsweise ragen die ersten Windungen weiter nach radial innen auf die Hauptachse des Kontaktelementes als die zweiten Windungen, oder umgekehrt.

In einer weiteren beispielhaften Ausgestaltung ist vorgesehen, dass das Kontaktelement eine konische Formgebung aufweist. Die Halteabschnitte sind winklig zu einer Ebene angeordnet, in der die Hauptachse des Kontaktelementes liegt. Eine Projektion der Halteabschnitte auf die Ebene, in der die Hauptachse des Kontaktelementes liegt, umfasst einen Winkel zur Hauptachse. Der Stützabschnitt und gegebenenfalls der Erstreckungsabschnitt sind in einem Winkel zu dem Radius auf die Hauptachse des Kontaktelementes angeordnet. Durch eine Montage des beispielhaften Kontaktelements in ein Bauteil mit einer zylindrischen Innenwandung werden die ersten und/oder zweiten Windungen derart verformt, dass der jeweilige Halteabschnitt an der Innenwandung anliegt. Die Stützabschnitte und gegebenenfalls die Erstreckungsabschnitte weisen im eingebauten Zustand einen größeren Winkel zu einem Radius auf die Hauptachse auf als im unmontierten Zustand. Ist dann noch ein Langformteil durch das Kontaktelement im montierten Zustand im Bauteil geführt, werden je nach Durchmesser des Langformteils die ersten und/oder die zweiten Windungen derart verformt, dass die Stützabschnitte und gegebenenfalls die Erstreckungsabschnitte einen größeren Winkel zum Radius auf die Hauptachse aufweisen als im montierten Zustand ohne Langformteil.

In einer Ausgestaltung ist vorgesehen, dass ein Halteabschnitt des Kontaktelementes an einer Innenwandung der Kabelverschraubung anliegt. Die Innenwandung ist bevorzugt konisch oder zylindrisch ausgestaltet. Weiter bevorzugt liegen eine Vielzahl von Halteabschnitten, weiter bevorzugt alle Halteabschnitte zumindest der ersten Windungen, weiter bevorzugt der ersten und zweiten Windungen des Kontaktelementes, an der Innenwandung an.

In einer Ausgestaltung ist vorgesehen, dass das mindestens eine Kontaktelement in einem Inneren eines Bauteils mit mindestens einem Außengewinde aufgenommen ist, wobei durch das Bauteil ein Langformteil führbar ist. Bevorzugt umfasst die Kabelverschraubung einen Nippel, beispielsweise einen Doppelnippel. Weiterhin vorteilhaft ist der Nippel das Bauteil, das das Kontaktelement aufnimmt. Das Bauteil umfasst bevorzugt eine Innenwandung, an der sich das Kontaktelement abstützt. Weiter bevorzugt stützt sich der Halteabschnitt gegen die Innenwandung des Bauteils ab. Die Innenwandung des Bauteils ist bevorzugt zylindrisch ausgestaltet. Weiter bevorzugt erstreckt sich eine Hochachse des Bauteils, insbesondere der zylindrischen Innenwandung, parallel zur Hauptachse des eingebauten Kontaktelements.

Beim Einführen des Kontaktelementes in das Bauteil wird das Kontaktelement verformt. Das Kontaktelement im montierten Zustand ist derart in das Bauteil eingebracht, dass sich die Halteabschnitte zumindest teilweise, bevorzugt vollständig, an die Innenwandung des Bauteils anlegen. Insbesondere ist ein Innendurchmesser des Bauteils kleiner als ein maximaler Außendurchmesser des unmontierten Kontaktelementes. Bevorzugt wird bei der Montage des Kontaktelementes in das Bauteil das Kontaktelement zumindest teilweise in radialer Richtung gestaucht. Weiter bevorzugt ist ein Halteabschnitt, der im unmontierten Zustand auf einer Ebene, in der die Hauptachse liegt, einen Winkel von etwa -50° bis etwa +50° zur Hauptachse der Durchgangsöffnung des Kontaktelements aufweist, im montierten Zustand im Wesentlichen parallel zur Hauptachse ausgerichtet. Weiter bevorzugt ist im montierten Zustand der erste montierte Durchmesser d1ₘ der Durchgangsöffnung ohne Langformteil kleiner als im unmontierten Zustand der erste Durchmesser d1.

In einer Ausgestaltung ist vorgesehen, dass im montierten Zustand der erste montierte Durchmesser d1ₘ der Durchgangsöffnung ohne Langformteil gleich groß wie im unmontierten Zustand der erste Durchmesser d1 ist, insbesondere wenn der Außendurchmesser des Kontaktelements kleiner oder gleich dem Innendurchmesser des Bauteils ist. Bevorzugt wird im montierten Zustand durch Einführen des Langformteils zumindest der Außendurchmesser des Kontaktelements derart aufgeweitet, dass die Halteabschnitte die Innenwandung des Bauteils elektrisch kontaktieren. Weiter bevorzugt ist im montierten Zustand der zweite montierte Durchmesser d2ₘ der Durchgangsöffnung ohne Langformteil kleiner als im unmontierten Zustand der Durchmesser d2. Weiter bevorzugt ist im montierten Zustand der zweite montierte Durchmesser d2ₘ der Durchgangsöffnung gleich groß wie im unmontierten Zustand der Durchmesser d2.

In einer Ausgestaltung, in der die ersten und/oder zweiten Windungen im unmontierten Zustand in einer Aufsicht auf das Kontaktelement in Richtung der Hauptachse eine Ausrichtung aufweisen, die winklig zum Radius auf die Hauptachse ist, kann bei der Montage des Kontaktelementes in das Bauteil eine Ausrichtung der ersten und/oder zweiten Windungen geändert werden. Bevorzugt vergrößert sich der Winkel der Ausrichtung, der vom Radius auf die Hauptachse abweicht, bei der Montage in ein Bauteil und bei Durchführung eines Langformteils, wenn das Kontaktelement im Bauteil montiert ist.

In einer Ausgestaltung ist vorgesehen, dass das mindestens eine Kontaktelement in einem Inneren eines Bauteils mit mindestens einem Außengewinde aufgenommen ist, wobei durch das Bauteil mindestens ein Langformteil führbar ist. Das mindestens eine Langformteil wird durch die Durchgangsöffnung des Kontaktelementes geführt. Die ersten und/oder die zweiten Windungen kontaktieren das Langformteil, insbesondere einen abisolierten Abschnitt des Langformteils. In einer weiteren Ausgestaltung ist vorgesehen, dass je nach Durchmesser des Langformteils nur die ersten Windungen, nur die zweiten Windungen oder die ersten und die zweiten Windungen zusammen das Langformteil kontaktieren über deren Stützabschnitte.

Bevorzugt werden durch das Langformteil die ersten und/oder zweiten Windungen derart kontaktiert und gedrückt, dass diese sich in radialer Ausrichtung zur Hauptachse verschieben. Bevorzugt werden durch das Langformteil die ersten und/oder zweiten Windungen derart kontaktiert und gedrückt, dass diese sich in radiale Richtung zur Hauptachse verschieben, wenn der Außendurchmesser des Kontaktelementes im montierten Zustand ohne Langformteil kleiner ist als der Innendurchmesser des Bauteils. Bevorzugt wird bei der Durchführung des Langformteils durch die Durchgangsöffnung des im Bauteil montierten Kontaktelementes eine Ausrichtung der ersten und/oder der zweiten Windungen geändert. Sind die ersten und/oder zweiten Windungen beispielsweise vor dem Durchführen des Langformteils radial ausgerichtet, werden diese durch Durchführen des Langformteils derart verschoben beziehungsweise verformt, dass diese sich in einem Winkel zum Radius auf die Hauptachse ausrichten. Sind die Ausrichtungen der ersten und/oder zweiten Windungen beispielsweise vor dem Einführen des Langformteils in einem Winkel vom Radius auf die Hauptachse angeordnet, werden diese durch Einführen des Langformteils derart durch Verschieben oder Verformen der Windungen geändert, dass sich der Winkel zum Radius auf die Hauptachse vergrößert.

Das Langformteil im Sinne der Erfindung umfasst zumindest einen länglichen, insbesondere biegsamen, bevorzugt biegeschlaffen, Körper ausgewählt aus einer Gruppe umfassend Kabel, Schläuche und/oder Rohre. Bevorzugt ist das Langformteil kein Kontaktstift. Weiter bevorzugt ist das Langformteil zur Übertragung von Strom und/oder Daten ausgelegt. Bevorzugt ist mindestens ein Langformteil durch das Kontaktelement durchführbar. Weiter bevorzugt ist das mindestens eine Langformteil durch das im Bauteil montierte Kontaktelement durchführbar. Bevorzugt weist das Langformteil einen elektromagnetischen Schirm auf, der weiter bevorzugt im Bereich einer Kabelverschraubung abisoliert ist.

Das Langformteil weist in einer Ausführungsform einen Langformteildurchmesser auf, der größer oder gleich einem ersten montierten Durchmesser d1ₘ des im Bauteil montierten Kontaktelementes ohne Langformteil ist. Bevorzugt kontaktiert das Langformteil den Stützabschnitt zumindest der ersten Windungen.

Das Langformteil weist in einer Ausführungsform einen Langformteildurchmesser auf, der größer oder gleich einem zweiten montierten Durchmesser d2ₘ des im Bauteil montierten Kontaktelementes ohne Langformteil ist. Bevorzugt kontaktiert das Langformteil den Stützabschnitt der ersten und der zweiten Windungen.

Eine beispielhafte Kabelverschraubung umfasst ein Bauteil, in welches das Kontaktelement aufgenommen werden kann. Die beispielhafte Kabelverschraubung weist zudem einen Dichtungsring zur Abdichtung zu einer Anschlussgeometrie, ein Druckelement zur Abdichtung eines Langformteils und eine Druckschraube zur Verpressung des Druckelements auf. Eine beispielhafte Ausgestaltung des Kontaktelementes in einem unmontierten Zustand weist erste Windungen auf, zwischen denen zwei zweite Windungen angeordnet sind. Die ersten Windungen und die zweiten Windungen sind jeweils radial ausgerichtet, wobei eine Winkelhalbierende der Schenkel der Stützabschnitte der ersten und zweiten Windungen dem Radius des Kontaktelementes entsprechen beziehungsweise an diesem ausgerichtet sind, jedoch sind auch andere Ausrichtungen möglich. Wird das beispielhafte Kontaktelement in das Bauteil montiert, wird durch die Montage das Kontaktelement radial gestaucht. Durch diese Stauchung kommen die ersten Windungen miteinander in Kontakt und verformen sich in Umfangsrichtung des Kontaktelementes. Die Ausrichtung der ersten Windungen ändert sich somit um den Winkel β1 zum Radius des Kontaktelementes. Die Ausrichtung der zweiten Windungen bleibt radial, jedoch sind auch andere Ausrichtungen möglich.

Wird in der beispielhaften Ausgestaltung des Bauteils mit dem Kontaktelement ein Langformteil mit kleinen Durchmesser durch das Bauteil beziehungsweise das Kontaktelement geführt, wobei das Langformteil mit dem kleinem Durchmesser nur die ersten Windungen kontaktiert und in Umfangsrichtung verformt. Hierdurch werden die ersten Windungen um einen Winkel β2, der größer ist als der Winkel β1, zum Radius des Kontaktelementes ausgerichtet. Die zweiten Windungen bleiben radial ausgerichtet, jedoch sind auch andere Ausrichtungen möglich. Wird hingegen ein Langformteil mit einem großen Durchmesser durch das Bauteil und das Kontaktelement geführt, bei dem das Langformteil die ersten Windungen und die zweiten Windungen kontaktiert und in Umfangsrichtung verformt, werden die ersten Windungen um einen Winkel β3, der größer ist als der Winkel β2, zum Radius des Kontaktelementes ausgerichtet. Die zweiten Windungen werden um den Winkel γ, der größer als 0° ist, zum Radius ausgerichtet.

Das Kontaktelemente wird für die Kontaktierung von Bauteilen mit Schirmungsfunktion und/oder Stromführfunktion verwendet. In einer Ausgestaltung ist vorgesehen, dass das Kontaktelement zum Einbau in ein Bauteil mit einer rotationssymmetrischen Innenwandung verwendet wird. In einer Ausgestaltung ist vorgesehen, dass das Kontaktelement zum Einbau in ein Bauteil mit einer zylindrischen und/oder konischen Innenwandung verwendet wird. Die Innenwandung kann alternativ auch torusförmig oder doppelkonisch ausgebildet sein oder eine andere rotationssymmetrische Ausgestaltung aufweisen. In einer Ausgestaltung ist vorgesehen, dass das Kontaktelement in einer Kabelverschraubung eingesetzt wird. Bevorzugt ist vorgesehen, dass das Kontaktelement zur elektrischen Verbindung eines Schirms eines Langformteils mit einem Bauteil einer Kabelverschraubung verwendet wird.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- Fig. 1: ein Kontaktelement in einem unmontierten Zustand;
- Fig. 2: das Kontaktelement aus Fig. 1 im unmontierten Zustand in einer Schnittansicht II-II;
- Fig. 3: das Kontaktelement aus Fig. 1 in einem montierten Zustand;
- Fig. 4: das Kontaktelement aus Fig. 1 in einem montierten Zustand bei durchgeführtem Langformteil;
- Fig. 5: das Kontaktelement aus Fig. 1 in einem montierten Zustand bei durchgeführtem Langformteil mit größerem Durchmesser als in Fig. 4;
- Fig. 6: eine alternative Ausgestaltung des Kontaktelements in einem unmontierten Zustand;
- Fig. 7: eine Schnittansicht VI-VI aus Fig. 5;
- Fig. 8: eine alternative Ausgestaltung des Kontaktelementes mit dreieckig geformten ersten Windungen und rechteckig geformten zweiten Windungen;
- Fig. 9: eine Schnittansicht aus Fig. 8;
- Fig. 10: eine alternative Ausgestaltung des Kontaktelementes mit dreieckig geformten ersten Windungen und dreieckig geformten zweiten Windungen;
- Fig. 11: eine Schnittansicht aus Fig. 10;
- Fig. 12: eine alternative Ausgestaltung des Kontaktelementes mit doppelt gewundenen zweiten Windungen;
- Fig. 13: eine Schnittansicht der Fig. 12;
- Fig. 14: ein Längsschnitt durch eine Kabelverschraubung;
- Fig. 15: ein Längsschnitt durch die Kabelverschraubung der Fig. 14 mit durchgeführtem Langformteil;
- Fig. 16: eine alternative Ausgestaltung des Kontaktelementes in einem unmontierten Zustand;
- Fig. 17: das Kontaktelement aus Fig. 16 in einem Bauteil montiert;
- Fig. 18: das Bauteil aus Fig. 17 mit einem Langformteil mit kleinem Durchmesser;
- Fig. 19: das Bauteil aus Fig. 17 mit einem Langformteil mit großem Durchmesser;
- Fig. 20: eine Explosionsansicht einer Kabelverschraubung.

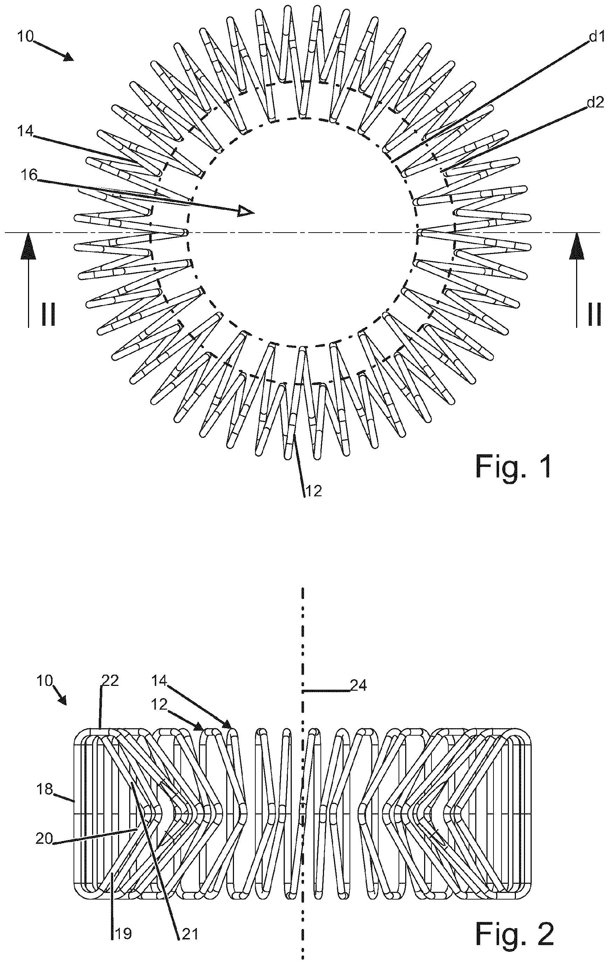

Fig. 1 zeigt ein Kontaktelement 10 in einem unmontierten Zustand. Das Kontaktelement 10 weist eine Vielzahl erster Windungen 12 und eine Vielzahl zweiter Windungen 14 auf, von denen nur jeweils eine beispielhaft bezeichnet ist. Das Kontaktelement 10 ist torusartig als eine ringförmige Feder ausgestaltet, die als eine in sich geschlossene, gewundene Feder geformt ist. Eine etwaige Fügestelle ist in den Figuren nicht dargestellt. Die ersten Windungen 12 unterscheiden sich von den zweiten Windungen 14 und ragen unterschiedlich weit nach radial innen. Die ersten und zweiten Windungen 12, 14 definieren eine Durchgangsöffnung 16. Die ersten und zweiten Windungen sind in der Ansichtsebene der Fig. 1 im Wesentlichen radial auf eine Hauptachse 24, die in Fig. 2 dargestellt ist, ausgerichtet. Die Durchgangsöffnung 16 umfasst einen ersten Durchmesser d1, der durch die ersten Windungen 12 definiert ist. Weiterhin umfasst die Durchgangsöffnung 16 einen zweiten Durchmesser d2, der durch die zweiten Windungen 14 definiert ist. Der erste Durchmesser d1 ist kleiner als der zweite Durchmesser d2.

Fig. 2 zeigt eine Schnittansicht II-II der Fig. 1. Die ersten und zweiten Windungen 12, 14 weisen einen Halteabschnitt 18 auf, der mit einer Innenwandung eines nicht dargestellten Bauteils in Kontakt gebracht werden kann. Der Halteabschnitt 18 ist parallel zu einer Hauptachse 24 des Kontaktelementes 10 ausgerichtet. Wie aus der obigen Beschreibung jedoch zu entnehmen ist, kann der Halteabschnitt 18 auch in einem Winkel zur Hauptachse 24 angeordnet sein. Weiterhin umfassen die ersten und zweiten Windungen 12, 14 jeweils einen Stützabschnitt 20, der mit einem nicht dargestellten Langformteil in Kontakt gebracht werden kann. Der Stützabschnitt 20 ist als winklig geformter Abschnitt mit zwei Schenkeln 19, 21 ausgeführt. Die ersten Windungen 12 weisen zudem einen Erstreckungsabschnitt 22 auf, der zwischen dem Halteabschnitt 18 und dem Stützabschnitt 20 angeordnet ist. Die zweiten Windungen 14 sind derart ausgestaltet, dass der Stützabschnitt 20 unmittelbar an den Halteabschnitt grenzt.

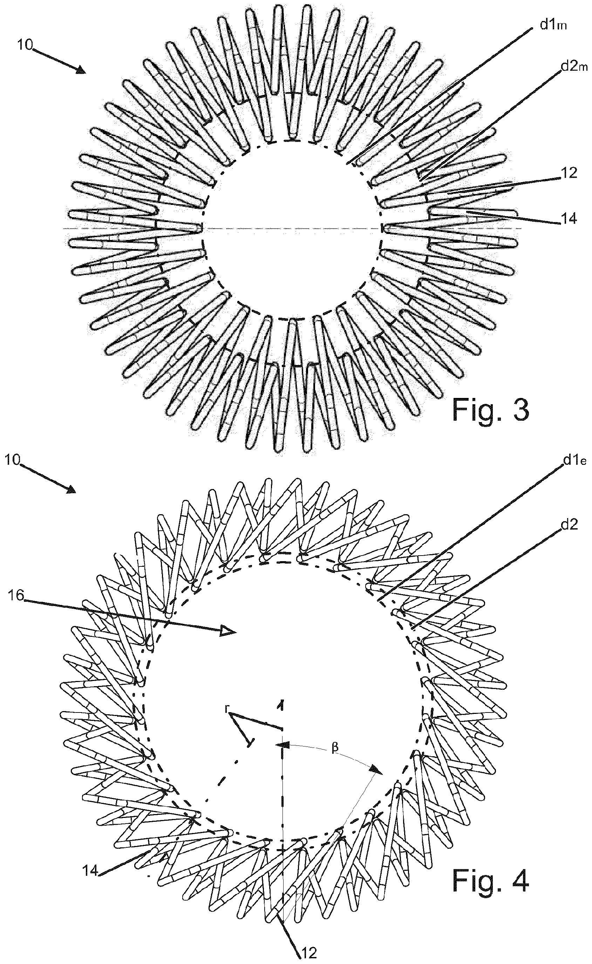

Fig. 3 zeigt das Kontaktelement 10 aus Fig. 1 in einem in ein nicht dargestelltes Bauteil montierten Zustand. Durch die Montage in dem Bauteil wird das Kontaktelement radial gestaucht. Die ersten Windungen 12 weisen einen ersten montierten Durchmesser d1ₘ auf. Die zweiten Windungen 14 weisen einen zweiten montierten Durchmesser d2ₘ auf.

Fig. 4 zeigt zur Verdeutlichung der Funktionsweise das Kontaktelement 10 in einem in ein nicht dargestelltes Bauteil montierten Zustand, in dem ein der Übersichtlichkeit halber nicht gezeigtes Langformteil durch die Durchtrittsöffnung 16 geführt ist. Das Langformteil weist einen Langformteildurchmesser auf, der größer ist als der erste montierte Durchmesser d1ₘ aus Fig. 3, aber kleiner ist als der zweite Durchmesser d2ₘ aus Fig. 3. Die ersten Windungen 12 werden zumindest hierdurch verformt und bilden einen ersten montierten Durchmesser d1ₑ, der gleich groß ist wie der Langformteildurchmesser. Die ersten Windungen 12 werden durch die Durchführung des Langformteils in eine Umfangsrichtung des Kontaktelementes 10 verformt, so dass diese einen von der in Fig. 1 gezeigten Radius r abweichenden Winkel β zum Radius r in der Ansichtsebene aufweisen, dessen Scheitelpunkt auf einer Außenumhüllenden des Kontaktelementes 10 angeordnet ist und in der Ansichtsebene entgegen dem Uhrzeigersinn ausgerichtet sind. Die zweiten Windungen 14 sind im Wesentlichen radial ausgerichtet wie in Fig. 1 im unmontierten Zustand, da das Langformteil diese nicht berührt. Eine radiale Verschiebung der ersten Windungen 12 beziehungsweise eine radiale Ausdehnung des Kontaktelements 10 wird durch das nicht dargestellte Bauteil verhindert, in das das Kontaktelement 10 montiert ist.

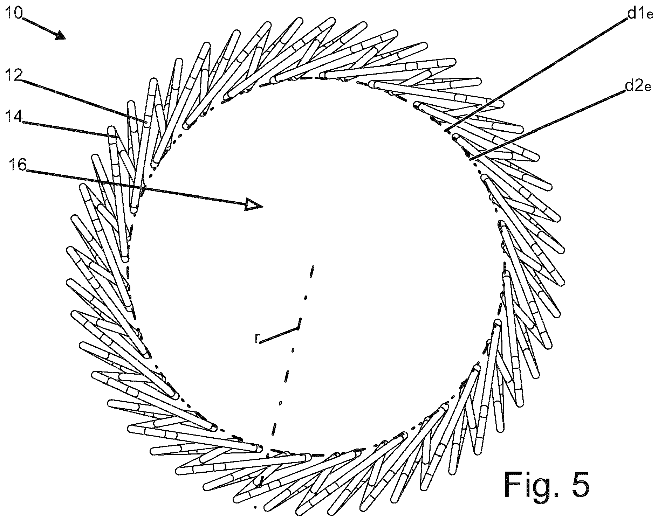

Fig. 5 zeigt das Kontaktelement 10 in einem in ein nicht dargestelltes Bauteil montierten Zustand, in dem ein der Übersichtlichkeit halber nicht gezeigtes Langformteil durch die Durchtrittsöffnung 16 geführt ist. Das Langformteil weist dabei einen Langformteildurchmesser auf, der größer ist als der erste montierte Durchmesser d1ₘ und größer als der zweite montierte Durchmesser d2ₘ aus Fig. 3. Die ersten Windungen 12 und die zweiten Windungen 14 werden hierdurch verformt und bilden einen ersten montierten Durchmesser d1ₑ und einen zweiten montierten Durchmesser d2ₑ, die gleich groß sind wie der nicht weiter bezeichnete Langformteildurchmesser insbesondere in einem abisolierten Bereich des Langformteils. Die ersten und zweiten Windungen 12, 14 werden durch die Durchführung des Langformteils in eine Umfangsrichtung des Kontaktelementes 10 verformt, so dass diese in der Ansichtsebene einen hier nicht eingezeichneten Winkel zum Radius r auf die Hauptachse 24 des Kontaktelementes 10 aufweisen, dessen Scheitelpunkt auf dem Umfang des Kontaktelementes 10 angeordnet ist und in der Ansichtsebene entgegen dem Uhrzeigersinn ausgerichtet sind. Eine radiale Verschiebung der ersten Windungen beziehungsweise eine radiale Ausdehnung des Kontaktelements wird durch das nicht dargestellte Bauteil verhindert, in das das Kontaktelement 10 montiert ist.

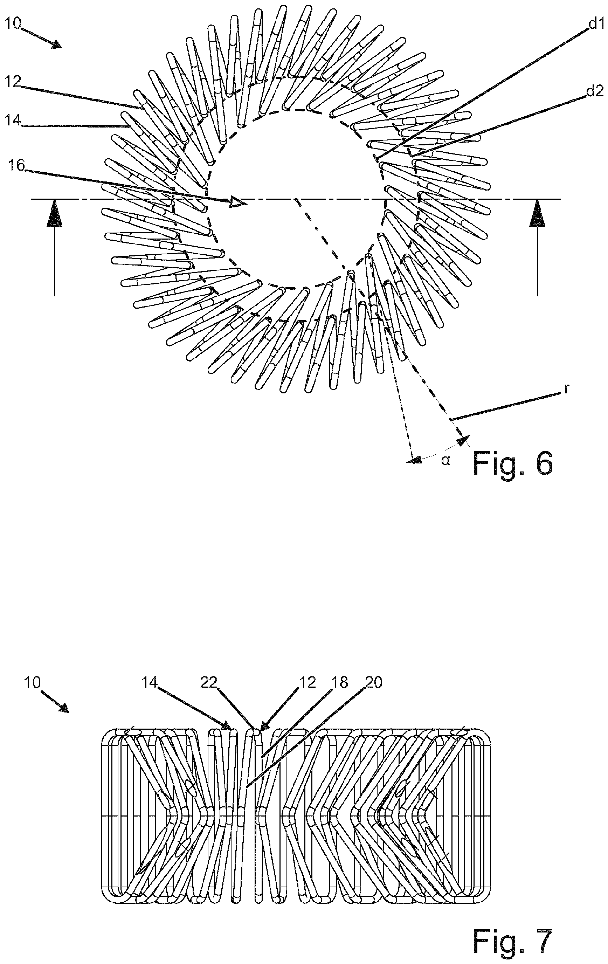

Fig. 6 zeigt eine alternative Ausgestaltung des Kontaktelementes 10 in einem unmontierten Zustand. Die ersten und zweiten Windungen 12, 14 sind in einem Winkel α von etwa 15° bis etwa 20° zum Radius r des Kontaktelements 10 ausgerichtet. Die ersten Windungen 12 definieren einen ersten Durchmesser d1 und die zweiten Windungen 14 definieren einen zweiten Durchmesser d2 der Durchtrittsöffnung 16.

Fig. 7 zeigt eine Schnittansicht VI-VI aus Fig. 6. Die ersten und zweiten Windungen 12, 14 weisen einen Halteabschnitt 18 auf, der mit einer Innenwandung eines nicht dargestellten Bauteils in Kontakt gebracht werden kann. Der Halteabschnitt 18 ist parallel zu einer Hauptachse 24 des Kontaktelementes 10 ausgerichtet. Weiterhin umfassen die ersten und zweiten Windungen 12, 14 jeweils einen Stützabschnitt 20, der mit einem nicht dargestellten Langformteil in Kontakt gebracht werden kann. Der Stützabschnitt 20 ist als winklig geformter Abschnitt mit zwei Schenkeln 19, 21 ausgeführt. Die ersten Windungen 12 weisen zudem einen Erstreckungsabschnitt 22 auf, der zwischen dem Halteabschnitt 18 und dem Stützabschnitt 20 angeordnet ist. Die zweiten Windungen 14 sind derart ausgestaltet der Stützabschnitt 20 unmittelbar an den Halteabschnitt grenzt.

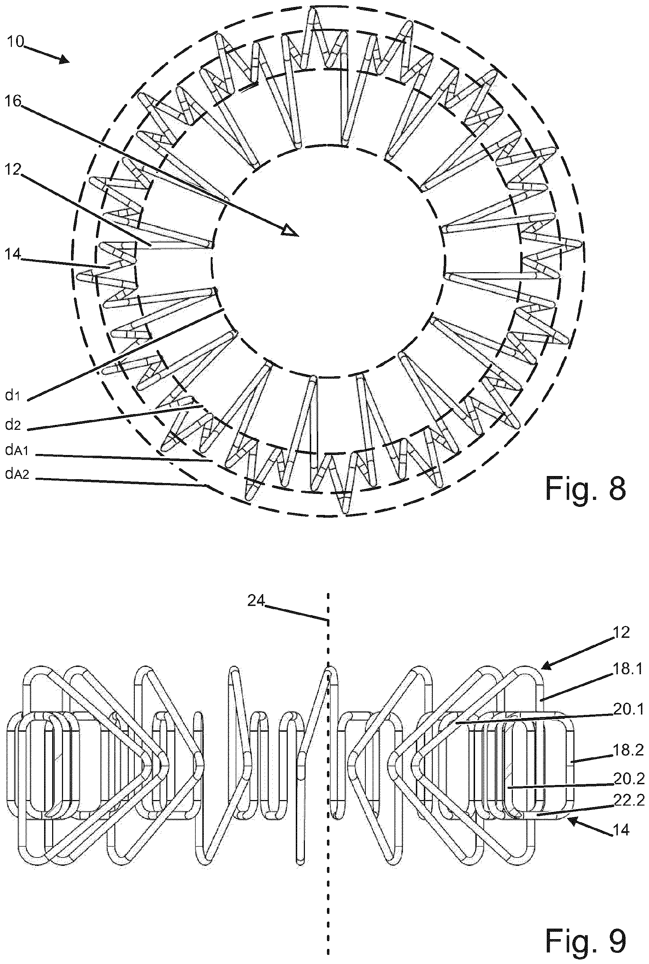

Fig. 8 zeigt eine alternative Ausgestaltung des Kontaktelementes 10 in einem unmontierten Zustand mit dreieckig geformten ersten Windungen 12 und rechteckig geformten zweiten Windungen 14. Die ersten Windungen 12 definieren einen ersten Durchmesser d₁ der Durchtrittsöffnung 16 sowie einen ersten Außendurchmesser d_{A1} des Kontaktelements 10. Die zweiten Windungen 14 definieren einen zweiten Durchmesser d₂ der Durchtrittsöffnung 16 sowie einen zweiten Außendurchmesser d_{A2} des Kontaktelements 10.

Fig. 9 zeigt eine Schnittansicht aus Fig. 8. Die ersten Windungen 12 sind im Wesentlichen dreieckig ausgestaltet, wobei der Halteabschnitt 18.1 und der Stützabschnitt 20.1 in einer Ansicht in Umfangsrichtung ein etwa gleichschenkliges Dreieck formen, was auch stumpfwinklig ausgebildet sein kann. Stützabschnitt 20.2, Erstreckungsabschnitt 22.2 und Halteabschnitt. 18.2 der zweiten Windungen 14 formen in einer Ansicht in Umfangsrichtung ein Rechteck, wobei der Halteabschnitt 18.2 der zweiten Windungen 14 radial zur Hauptachse 24 weiter außen angeordnet ist als der Halteabschnitt 18.1 der ersten Windungen 12.

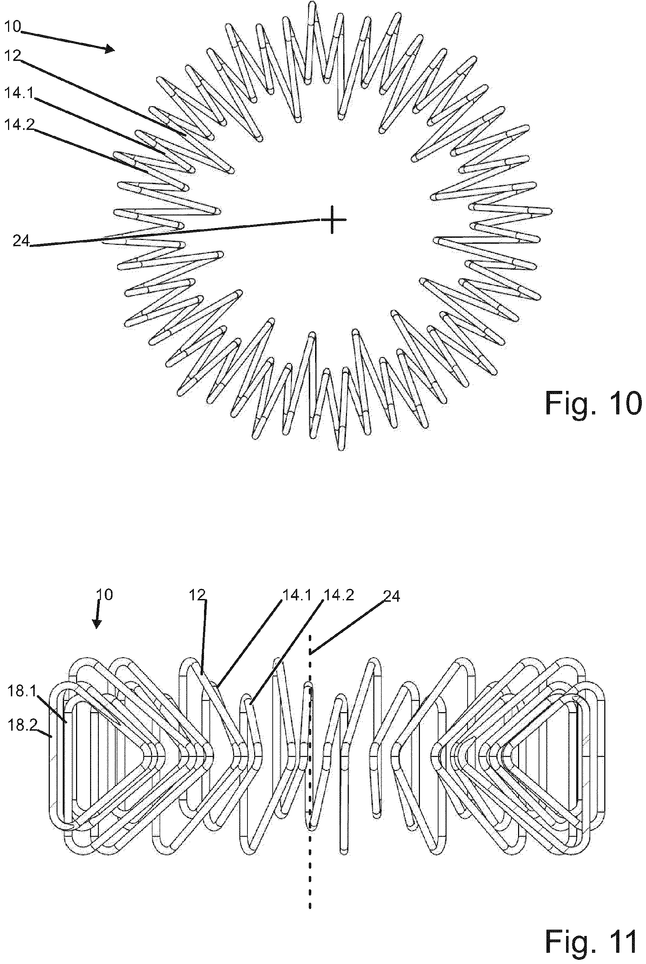

Fig. 10 zeigt eine alternative Ausgestaltung des Kontaktelementes 10 mit dreieckig geformten ersten Windungen 12 und dreieckig geformten zweiten Windungen 14.1 und 14.2. In Umfangsrichtung sind erste Windungen 12, zweite Windungen 14.1 und zweite Windungen 14.2 nacheinander angeordnet. Die zweiten Windungen 14.2 ragen zur Hauptachse 24 radial weiter nach außen als die ersten Windungen 12 und die zweiten Windungen 14.1.

Fig. 11 zeigt eine Schnittansicht aus Fig. 10, der die Abfolge der ersten Windungen 12, zweiten Windungen 14.1 und zweiten Windungen 14.2 zu entnehmen ist. Weiterhin ist Fig. 11 zu entnehmen, dass der Halteabschnitt 18.2 der zweiten Windungen 14.2 zur Hauptachse 24 weiter radial außen angeordnet ist, als der Halteabschnitt 18.1 der zweiten Windungen 14.1.

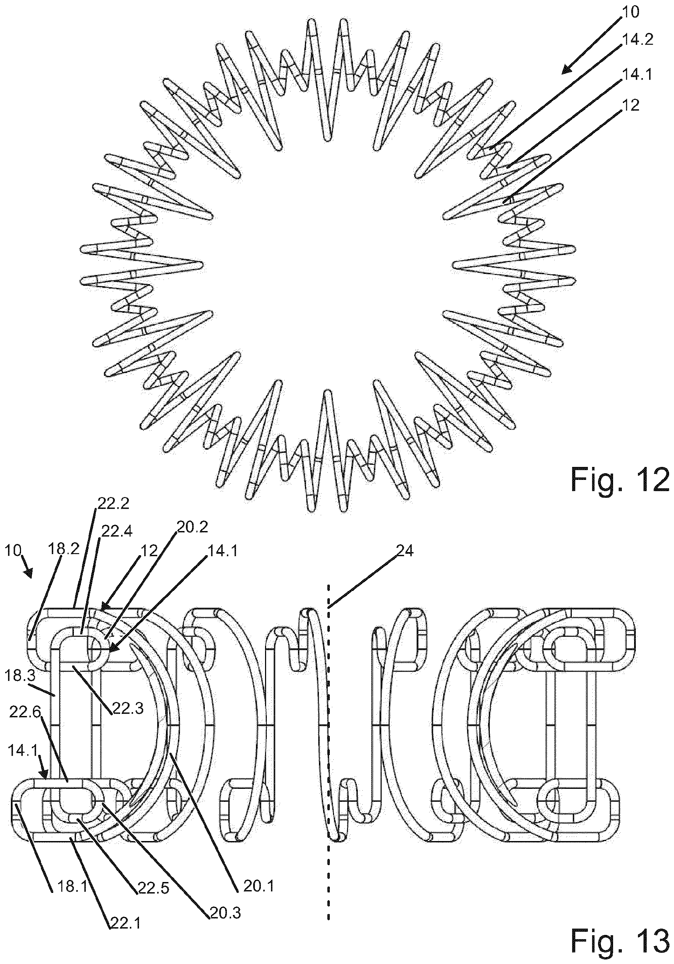

Fig. 12 zeigt eine alternative Ausgestaltung des Kontaktelementes mit ersten Windungen 12 und zwei Ausgestaltungen von zweiten Windungen 14.1 und 14.2.

Fig. 13 zeigt eine Schnittansicht der Fig. 12, der zu entnehmen ist, dass die ersten Windungen 12 einen gebogenen Stützabschnitt 20.1, zwei Erstreckungsabschnitte 22.1 und 22.1 sowie einen Halteabschnitt 18.1 aufweisen. Das Kontaktelement 10 umfasst zwei Ausgestaltungen von zweiten Windungen 14.1 und 14.2. Die erste Ausgestaltung 14.1 der zweiten Windungen umfasst einen Halteabschnitt 18.2, zwei Erstreckungsabschnitte 22.3 und 22.4 und einen Stützabschnitt 20.2.. Die unmittelbar anschließende zweite Ausgestaltung 14.2 der zweiten Windung umfasst einen Halteabschnitt 18.3, zwei Erstreckungsabschnitte 22.5 und 22.6 und einen Stützabschnitt 20.3. Der Halteabschnitt 18.3 der zweiten Ausgestaltung 14.2 der zweiten Windungen ist näher an der Hauptachse 24 angeordnet als die Halteabschnitte 18.1 und 18.2 der ersten Windungen 12 und der ersten Ausgestaltung 14.1 der zweiten Windungen. Durch diese Ausgestaltung wird ermöglicht, dass ein hier nicht gezeigter Abschnitt der Innenwandung eines Bauteils, in den das Kontaktelement 10 montierbar ist, zwischen den Halteabschnitten 18.1 und 18.2 eingerastet werden kann. Das Bauteil kann beispielsweise derart gefertigt sein, dass eine Bohrung einen ersten und einen zweiten Innendurchmesser aufweist, der für die Anlage der Halteabschnitte 18.1 beziehungsweise 18.2 der ersten Windungen 12 und der ersten Ausgestaltung 14.1 der zweiten Windungen geeignet ist, wobei zwischen dem ersten und dem zweiten Innendurchmesser ein kleinerer dritter Innendurchmesser angeordnet ist, der den genannten Abschnitt des Bauteils bildet und der für die Anlage des Halteabschnittes 18.3 ausgelegt ist.

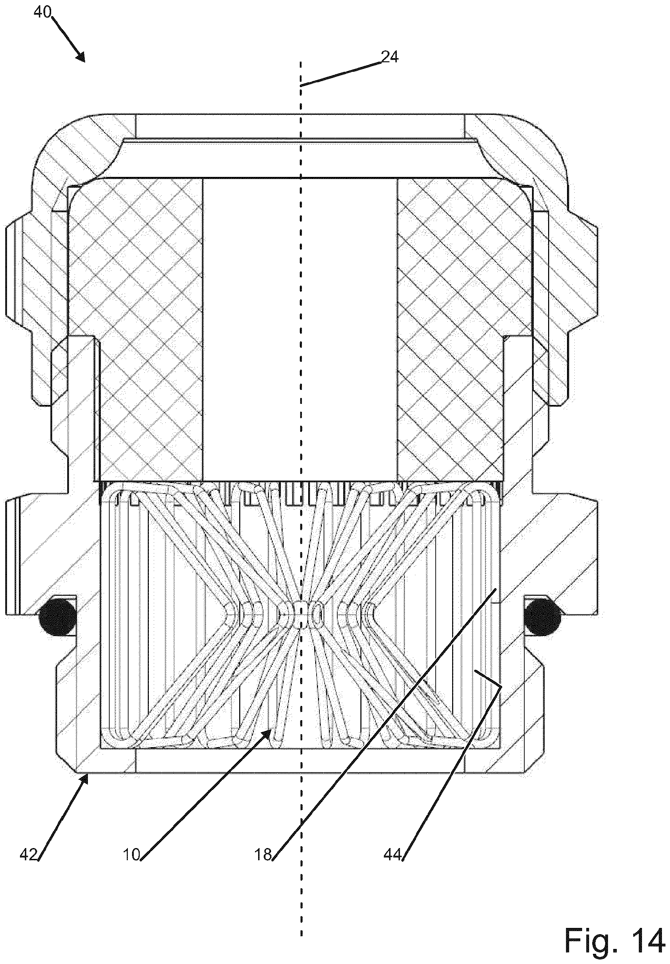

Fig. 14 zeigt einen Längsschnitt durch eine Kabelverschraubung 40. Die Kabelverschraubung 40 weist ein Bauteil 42 auf, in das ein Kontaktelement 10 montiert ist. Während der Montage wird das Kontaktelement 10 in radiale Richtung auf die Hauptachse 24 gestaucht, so dass dieses sich mit den Halteabschnitten 18 an einer Innenwandung 44 des Bauteils 42 anlegen kann.

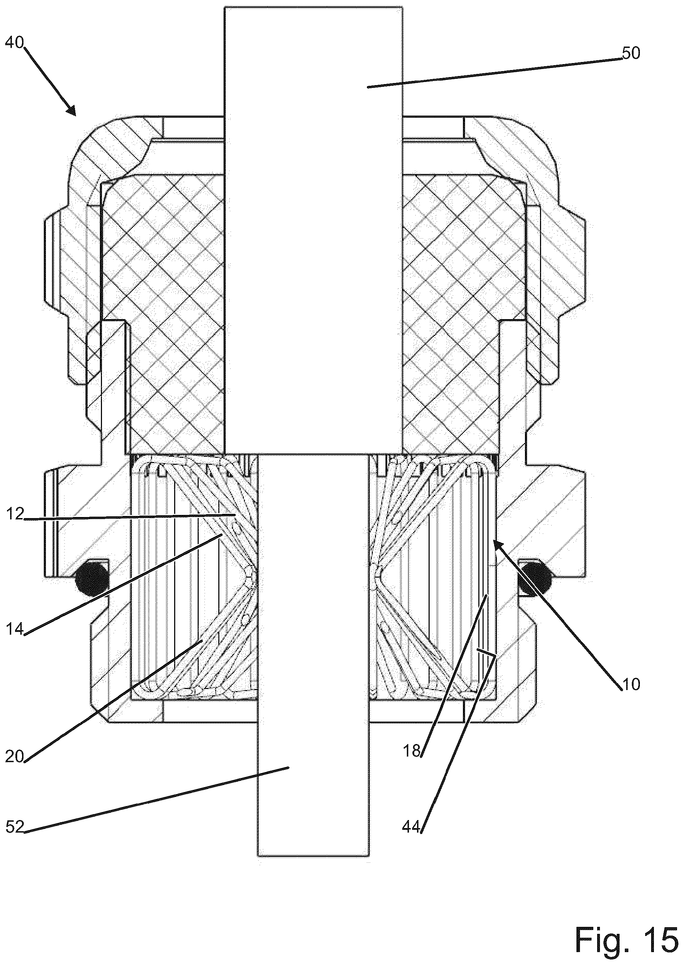

Fig. 15 zeigt einen Längsschnitt durch die Kabelverschraubung der Fig. 14 mit durchgeführtem Langformteil 50. Das Langformteil 50 weist einen abisolierten Abschnitt 52 auf, der den Stützabschnitt 20 des Kontaktelements 10 kontaktiert. Wie bereits oben beschrieben, verformen sich die vom Langformteil 50 im Bereich des abisolierten Abschnittes 52 kontaktierten Windungen 12, 14, wobei eine radiale Ausdehnung verhindert wird, da die Halteabschnitte 18 von der Innenwandung 44 gehalten werden.

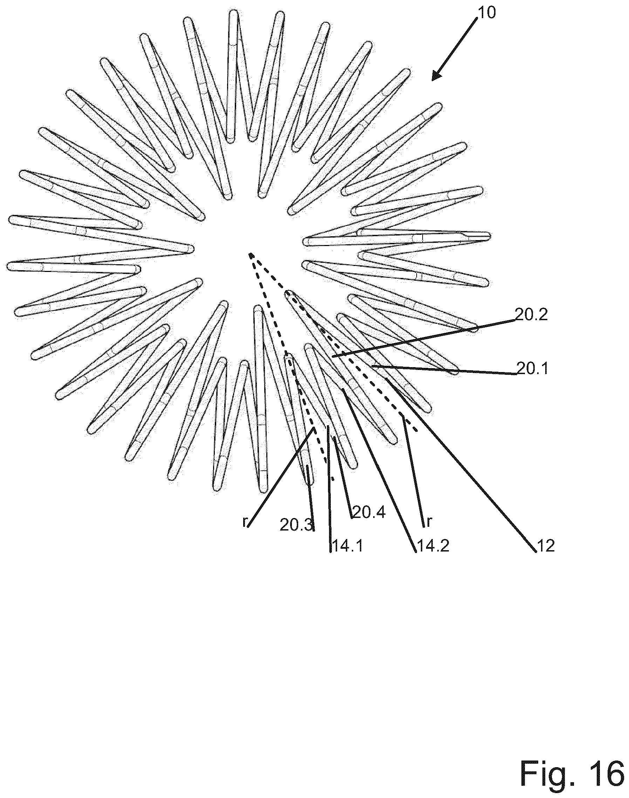

Fig. 16 zeigt eine alternative Ausgestaltung des Kontaktelementes 10 in einem unmontierten Zustand. Das Kontaktelement weist erste Windungen 12 auf, zwischen denen zwei zweite Windungen 14.1 und 14.2 angeordnet sind. Die Windungen 12 und beispielhaft 14.1 sind jeweils radial ausgerichtet, wobei eine Winkelhalbierende der Schenkel der Stützabschnitte 20.1 und 20.2 beziehungsweise 20.3 und 20.4 dem Radius r des Kontaktelementes 10 entsprechen.

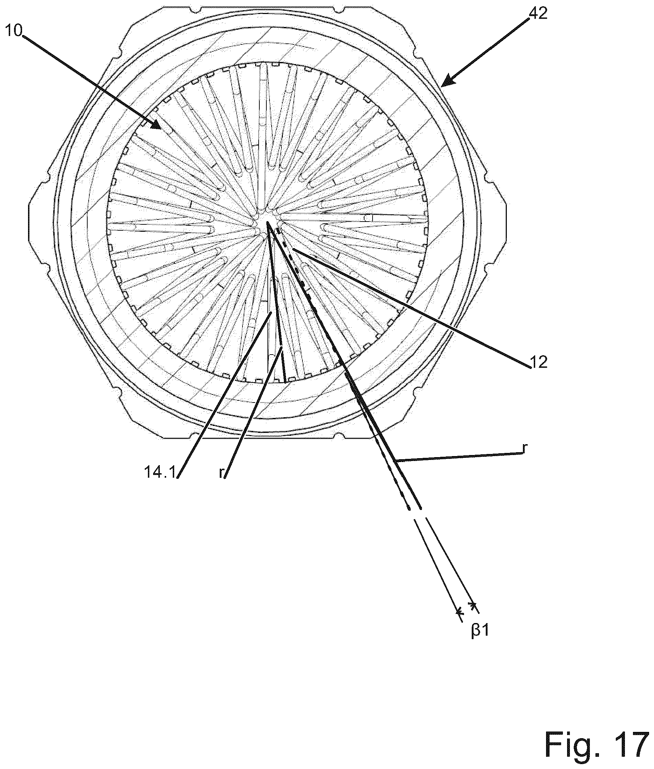

Fig. 17 zeigt das Kontaktelement 10 aus Fig. 16 in einem Bauteil 42 montiert. Durch die Montage wird das Kontaktelement 10 radial gestaucht. Durch diese Stauchung kommen die ersten Windungen 12 miteinander in Kontakt und verformen sich in Umfangsrichtung des Kontaktelementes 10. Die Ausrichtung der ersten Windungen 12 ändert sich somit um den Winkel β1 zum Radius r. Die Ausrichtung der beispielhaften zweiten Windungen 14.1 bleibt radial.

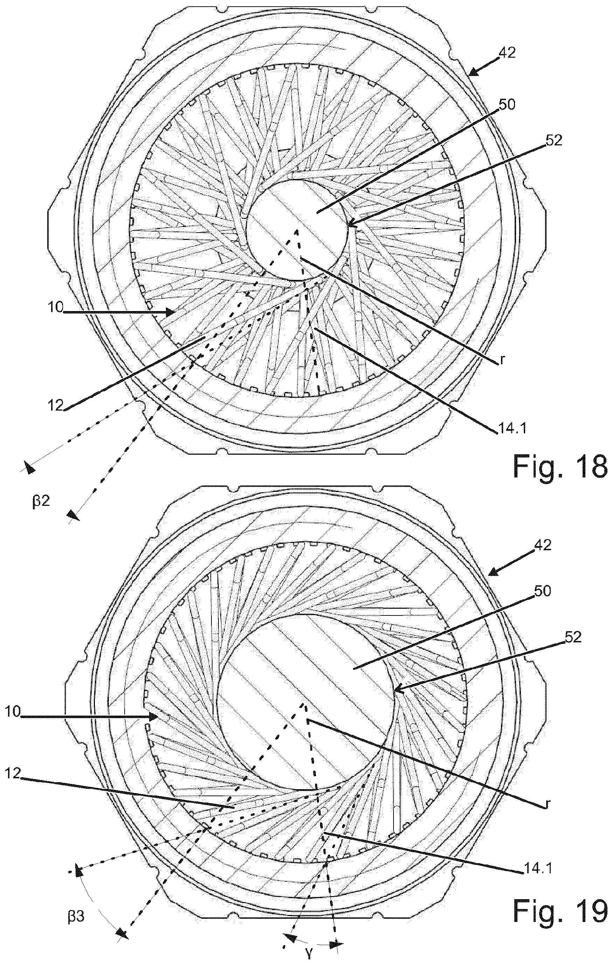

Fig. 18 zeigt das Bauteil aus Fig. 17 mit einem Langformteil 50 mit kleinem Durchmesser. Das Langformteil 50 hat einen der Übersichtlichkeit halber nicht eingezeichneten Durchmesser im abisolierten Abschnitt 52, bei dem dieses nur die ersten Windungen 12 kontaktiert und in Umfangsrichtung verformt. Hierdurch werden die ersten Windungen 12 um einen Winkel β2 zum Radius r des Kontaktelementes 10 ausgerichtet. Die beispielhaften zweiten Windungen 14.1. bleiben radial ausgerichtet.

Fig. 19 zeigt das Bauteil aus Fig. 17 mit einem Langformteil mit einem großen Durchmesser. Das Langformteil 50 hat einen der Übersichtlichkeit halber nicht eingezeichneten Durchmesser im abisolierten Abschnitt 52, bei dem dieses die ersten Windungen 12 und die zweiten Windungen 14 kontaktiert und in Umfangsrichtung verformt. Hierdurch werden die ersten Windungen 12 um einen Winkel β3 zum Radius r des Kontaktelementes 10 ausgerichtet. Die beispielhaften Windungen 14.2 werden um den Winkel γ in Richtung des Radius' r ausgerichtet.

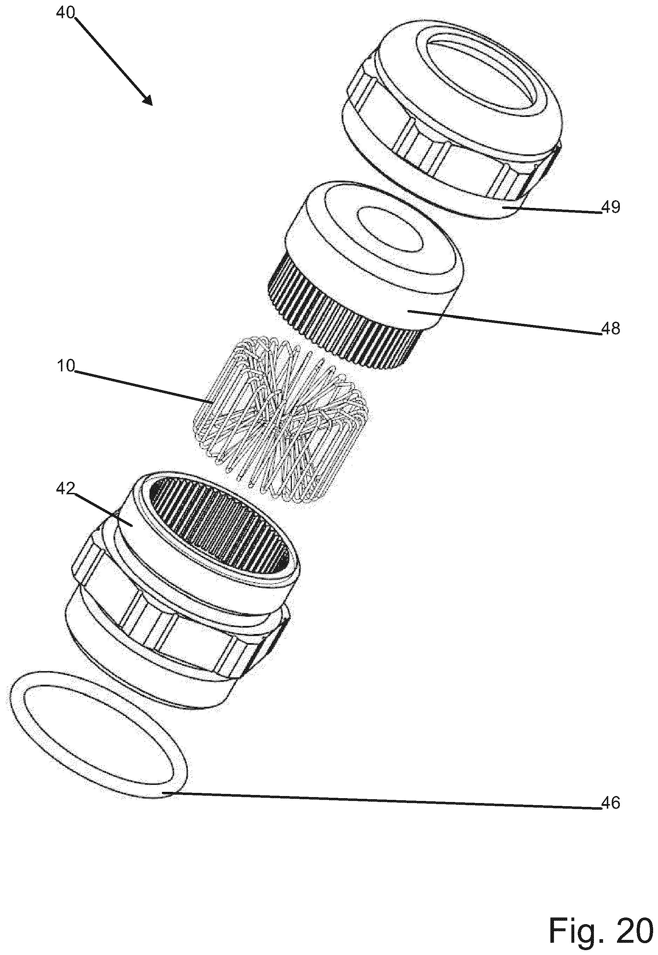

Fig. 20 zeigt eine Explosionsansicht einer Kabelverschraubung 40. Die Kabelverschraubung 10 umfasst ein Bauteil 42, in das das Kontaktelement 10 aufgenommen werden kann. Die Kabelverschraubung 40 weist zudem einen Dichtungsring 46, zur Abdichtung zu einer nicht gezeigten Anschlussgeometrie, ein Druckelement 48, zur Abdichtung eines nicht gezeigten Langformteils und eine Druckschraube 49, zur Verpressung des Druckelements 48 auf.

Mit dem vorgeschlagenen Kontaktelement können verschiedene Langformteile mit unterschiedlichen Durchmessern sicher kontaktiert werden. Ein Austausch des Kontaktelementes, wie aus dem Stand der Technik bekannt ist, um beispielsweise eine Kabelverschraubung auf unterschiedliche Kabeldurchmesser anzupassen entfällt bei dem vorgeschlagenen Kontaktelement. Weiterhin ermöglicht das erfindungsgemäße Kontaktelement insbesondere auch die Aufnahme eines Langformteils mit einem kleineren Durchmesser, ohne durch Reduktion der das Langformteil kontaktierenden Windungen eine Federsteifigkeit nachteilig zu erhöhen.

## Patentansprüche

1. Kabelverschraubung (40) mit mindestens einem Kontaktelement (10) zur Kontaktierung zumindest mit einem Langformteil (50), wobei das Kontaktelement (10) zumindest mehrere erste Windungen (12) und mehrere gegenüber der ersten Windungen (12) geometrisch unterschiedliche zweite Windungen (14) und eine Durchtrittsöffnung (16) zur Durchführung eines Langformteils (50) umfasst, wobei ein erster Durchmesser d1 der Durchtrittsöffnung (16) durch die ersten Windungen (12) und ein zweiter Durchmesser d2 der Durchtrittsöffnung (16) durch die zweiten Windungen (14) definiert ist und wobei der erste Durchmesser d1 und der zweite Durchmesser d2 unterschiedlich sind.

2. Kabelverschraubung (40) gemäß Anspruch 1, **dadurch gekennzeichnet, dass** das Kontaktelement (10) ringförmig ausgebildet ist.

3. Kabelverschraubung (40) gemäß einem oder mehreren der vorhergehenden Ansprüche, **dadurch gekennzeichnet, dass** die ersten und/oder die zweiten Windungen (12, 14) mindestens einen Halteabschnitt (18) zur Kontaktierung an einem Bauteil (42) umfassen.

4. Kabelverschraubung (40) gemäß einem oder mehreren der vorhergehenden Ansprüche, **dadurch gekennzeichnet, dass** die ersten und die zweiten Windungen (12, 14) einen Stützabschnitt (20) zur Anlage an ein Langformteil (50) aufweisen.

5. Kabelverschraubung (40) gemäß Anspruch 3, **dadurch gekennzeichnet, dass** die ersten und/oder die zweiten Windungen (12, 14) mindestens einen Erstreckungsabschnitt (22) umfassen, der an den Halteabschnitt (18) anschließt.

6. Kabelverschraubung (40) gemäß einem oder mehreren der vorhergehenden Ansprüche, **dadurch gekennzeichnet, dass** die ersten und die zweiten Windungen (12, 14) gleiche oder unterschiedliche Grundformen, in einer Ansicht auf die erste beziehungsweise zweite Windung (12, 14) in Umfangsrichtung des Kontaktelementes (10), aufweisen.

7. Kabelverschraubung (40) gemäß Anspruch 6, **dadurch gekennzeichnet, dass** die Grundform der ersten und/oder der zweiten Windung (12, 14), in einer Ansicht auf die erste beziehungsweise zweite Windung (12, 14), in Umfangsrichtung des Kontaktelementes (10) ausgewählt ist aus einer Gruppe umfassend rund, ellipsoid, dreieckig, viereckig, fünfeckig oder mehreckig, quadratisch, rechteckig, trapezförmig, polygonal und/oder halbkreisförmig.

8. Kabelverschraubung (40) gemäß einem oder mehreren der vorhergehenden Ansprüche, **dadurch gekennzeichnet, dass** zwischen zwei ersten Windungen (12) ein oder mehrere zweite Windungen (14) angeordnet sind.

9. Kabelverschraubung (40) gemäß einem oder mehreren der vorhergehenden Ansprüche, **dadurch gekennzeichnet, dass** die ersten und die zweiten Windungen (12, 14) einzeln oder in Gruppen abwechselnd angeordnet sind.

10. Kabelverschraubung (40) gemäß einem oder mehreren der Ansprüche 3 und 5, **dadurch gekennzeichnet, dass** mindestens einer der Halteabschnitte (18) geradlinig ausgebildet ist und zu einer durch die Durchgangsöffnung (16) gehenden Hauptachse (24) einen Winkel in einem Bereich von etwa -50° bis etwa +50° aufweist.

11. Kabelverschraubung (40) gemäß Anspruch 4, **dadurch gekennzeichnet, dass** der Stützabschnitt (20) der ersten und/oder der zweiten Windungen (12, 14), in einer Ansicht auf die erste beziehungsweise zweite Windung in Umfangsrichtung des Kontaktelementes (10), bogenförmig, gradlinig, halbkreisförmig und/oder als Teil eines Dreiecks mit einer Dreieckspitze (26) ausgebildet ist.

12. Kabelverschraubung (40) gemäß einem oder mehreren der vorhergehenden Ansprüche, **dadurch gekennzeichnet, dass** die ersten Windungen (12) ausgebildet sind mit mindestens einem Erstreckungsabschnitt (22) und den ersten Durchmesser d1 der Durchgangöffnung (16) definieren und die zweiten Windungen (14) im Wesentlichen dreieckig, gesehen in einer Ansicht auf die zweite Windung (14) in Umfangsrichtung des Kontaktelementes (10), ausgebildet sind und den zweiten Durchmesser d2 der Durchgangsöffnung (16) definieren, wobei der erste Durchmesser d1 kleiner ist als der zweite Durchmesser d2.

13. Kabelverschraubung (40) gemäß einem oder mehreren der vorhergehenden Ansprüche 3, 5 und 10, **dadurch gekennzeichnet, dass** mindestens einer der Halteabschnitte (18) des Kontaktelementes (10) an einer Innenwandung (44) der Kabelverschraubung (40) anliegt.

14. Kabelverschraubung (40) gemäß einem oder mehreren der vorhergehenden Ansprüche, **dadurch gekennzeichnet, dass** das mindestens eine Kontaktelement (10) in einem Inneren eines Bauteils (42) mit mindestens einem Außengewinde aufgenommen ist, wobei durch das Bauteil mindestens ein Langformteil (50) führbar ist.

## Claims

1. Cable gland (40) with at least one contact element (10) for contacting at least one long moulded part (50), the contact element (10) comprising at least a plurality of first windings (12) and a plurality of second windings (14), which are geometrically different from the first windings (12), and a through-opening (16) for a passage of a long moulded part (50), wherein a first diameter d1 of the through opening (16) is defined by the first windings (12) and a second diameter d2 of the through-opening (16) is defined by the second windings (14) and wherein the first diameter d1 and the second diameter d2 are different.

2. Cable gland (40) according to claim 1, **characterized in that** the contact element (10) is annular in shape.

3. Cable gland (40) according to one or more of the preceding claims, **characterized in that** the first and/or the second windings (12, 14) comprise at least one retaining section (18) for contacting a component (42).

4. Cable gland (40) according to one or more of the preceding claims, **characterized in that** the first and the second windings (12, 14) have a supporting section (20) for abutment against a long moulded part (50).

5. Cable gland (40) according to claim 3, **characterized in that** the first and/or the second windings (12, 14) comprise at least one extending section (22) which adjoins the retaining section (18).

6. Cable gland (40) according to one or more of the preceding claims, **characterized in that** the first and second windings (12, 14) have identical or different basic shapes, in a view of the first or second winding (12, 14), respectively, in the circumferential direction of the contact element (10).

7. Cable gland (40) according to claim 6, **characterized in that** the basic shape of the first and/or the second winding (12, 14), in a view of the first or second winding (12, 14), respectively, in the circumferential direction of the contact element (10) is selected from a group comprising round, ellipsoidal, triangular, quadrangular, pentagonal or polygonal, square, rectangular, trapezoidal, polygonal and/or semicircular.

8. Cable gland (40) according to one or more of the preceding claims, **characterized in that** one or more second windings (14) are arranged between two first windings (12).

9. Cable gland (40) according to one or more of the preceding claims, **characterized in that** the first and second windings (12, 14) are arranged individually or alternately in groups.

10. Cable gland (40) according to one or more of the claims 3 and 5, **characterized in that** at least one of the retaining sections (18) is of rectilinear design and has an angle in a range from about -50° to about +50° to a main axis (24) passing through the through-opening (16).

11. Cable gland (40) according to claim 4, **characterized in that** the supporting section (20) of the first and/or the second windings (12, 14), in a view of the first or second winding, respectively, in the circumferential direction of the contact element (10), is arcuate, rectilinear, semicircular and/or is formed as part of a triangle with a triangular apex (26).

12. Cable gland (40) according to one or more of the preceding claims, **characterized in that** the first windings (12) are formed with at least one extending section (22) and define the first diameter d1 of the through-opening (16) and the second windings (14) are formed essentially triangular, as seen in a view of the second winding (14) in the circumferential direction of the contact element (10), and define the second diameter d2 of the through-opening (16), wherein the first diameter d1 is smaller than the second diameter d2.

13. Cable gland (40) according to one or more of the preceding claims 3, 5 and 10, **characterized in that** at least one of the retaining sections (18) of the contact element (10) abuts against an inner wall (44) of the cable gland (40).

14. Cable gland (40) according to one or more of the preceding claims, **characterized in that** the at least one contact element (10) is accommodated in an interior of a component (42) with at least one external thread, wherein at least one long moulded part (50) can be passed through the component.

## Revendications

1. Presse-étoupe (40) avec au moins un élément de contact (10) pour la mise en contact au moins avec une pièce moulée allongée (50), l'élément de contact (10) comprenant au moins plusieurs premières spires (12) et plusieurs deuxièmes spires (14) géométriquement différentes des premières spires (12) et une ouverture de passage (16) pour le passage d'une pièce moulée allongée (50), dans lequel un premier diamètre d1 de l'ouverture de passage (16) est défini par les premières spires (12) et un deuxième diamètre d2 de l'ouverture de passage (16) est défini par les deuxièmes spires (14), et dans lequel le premier diamètre d1 et le deuxième diamètre d2 sont différents.

2. Presse-étoupe (40) selon la revendication 1, **caractérisé en ce que** l'élément de contact (10) est formé de forme annulaire.

3. Presse-étoupe (40) selon l'une ou plusieurs des revendications précédentes, **caractérisé en ce que** les premières et/ou les deuxièmes spires (12, 14) comprennent au moins une section de retenue (18) pour la mise en contact avec un élément (42).

4. Presse-étoupe (40) selon l'une ou plusieurs des revendications précédentes, **caractérisé en ce que** les premières et deuxièmes spires (12, 14) comprennent une section de support (20) pour le montage sur une pièce moulée allongée (50).

5. Presse-étoupe (40) selon la revendication 3, **caractérisé en ce que** les premières et/ou les deuxièmes spires (12, 14) comprennent au moins une section d'extension (22) qui se raccorde à la section de retenue (18).

6. Presse-étoupe (40) selon une ou plusieurs des revendications précédentes, **caractérisé en ce que** les premières et deuxièmes spires (12, 14) ont des formes de base identiques ou différentes, dans une vue de la première ou de la deuxième spire (12, 14), respectivement, dans la direction circonférentielle de l'élément de contact (10).

7. Presse-étoupe (40) selon la revendication 6, **caractérisé en ce que** la forme de base de la première et/ou la deuxième spire (12, 14), dans une vue de la première ou de la deuxième spire (12, 14), dans la direction circonférentielle de l'élément de contact (10), est choisie dans un groupe comprenant les formes ronde, ellipsoïdale, triangulaire, quadrangulaire, pentagonale ou polyangulaire, carrée, rectangulaire, trapézoïdale, polygonale et/ou semi-circulaire.

8. Presse-étoupe (40) selon l'une ou plusieurs des revendications précédentes, **caractérisé en ce qu'**une ou plusieurs deuxièmes spires (14) sont disposées entre deux premières spires (12).

9. Presse-étoupe (40) selon l'une ou plusieurs des revendications précédentes, **caractérisé en ce que** les premières et les secondes spires (12, 14) sont disposées en alternance, individuellement ou en groupes.

10. Presse-étoupe (40) selon l'une ou plusieurs des revendications 3 et 5, **caractérisé en ce qu'**au moins l'une des sections de retenue (18) est formé de forme rectiligne et présente un angle compris dans une plage d'environ -50° à environ +50° par rapport à un axe principal (24) traversant l'ouverture de passage (16).

11. Presse-étoupe (40) selon la revendication 4, **caractérisé en ce que** la section de support (20) des premières et/ou deuxièmes spires (12, 14), vue sur la première ou la deuxième spire dans la direction circonférentielle de l'élément de contact (10), est formé en forme d'arc, rectiligne, semi-circulaire et/ou en tant que partie d'un triangle avec une pointe de triangle (26).

12. Presse-étoupe (40) selon l'une ou plusieurs des revendications précédentes, **caractérisé en ce que** les premières spires (12) sont formées avec au moins une section d'extension (22) et définissent le premier diamètre d1 de l'ouverture de passage (16) et les deuxièmes spires (14) sont formées sensiblement de forme triangulaire, vues dans une vue de la deuxième spire (14) dans la direction circonférentielle de l'élément de contact (10), et définissent le deuxième diamètre d2 de l'ouverture de passage (16), le premier diamètre d1 étant plus petit que le deuxième diamètre d2.

13. Presse-étoupe (40) selon l'une ou plusieurs des revendications précédentes 3, 5 et 10, **caractérisé en ce qu'**au moins l'une des sections de retenue (18) de l'élément de contact (10) est en contact avec une paroi intérieure (44) du presse-étoupe (40).

14. Presse-étoupe (40) selon l'une ou plusieurs des revendications précédentes, **caractérisé en ce que** ledit au moins un élément de contact (10) est logé à l'intérieur d'un élément (42) ayant au moins un filetage extérieur, ledit composant pouvant être traversé par au moins une pièce moulée allongée (50).
